# EUROPEAN PATENT SPECIFICATION

(11) **EP 3 786 553 B1**
(45) Date of publication and mention of the grant of the patent: **04.11.2026**
(21) Application number: 20192794.4
(22) Date of filing: 26.08.2020
(51) Int. Cl.: F25D 17/06, F25D 21/00, F25D 11/02, F25D 23/10, F25B 5/02

(54) **UNDER COUNTER TYPE REFRIGERATOR AND A METHOD FOR CONTROLLING THE SAME**
UNTERTHEKENKÜHLSCHRANK UND VERFAHREN ZUR STEUERUNG DAVON
RÉFRIGÉRATEUR DE TYPE ENCASTRÉ ET SON PROCÉDÉ DE COMMANDE

(30) Priority: 02.09.2019 KR 20190108240
(43) Date of publication of application: 03.03.2021
(73) Proprietor: LG Electronics Inc., 07336 SEOUL (KR)
(72) Inventor: LEE, Sanggyun, 08592 Seoul (KR); LEE, Younseok, 08592 Seoul (KR); KIM, Dongseok, 08592 Seoul (KR); SUH, Yonghun, 08592 Seoul (KR)
(74) Representative: Vossius & Partner Patentanwälte Rechtsanwälte mbB

(56) References cited:
- EP-A2- 1 790 925
- US-A1- 2008 156 031

## Description

### BACKGROUND

The present disclosure relates to an under counter type refrigerator and a method for controlling the same.

In general, refrigerators are home appliances for storing food at a low temperature in a storage space that is covered by a door.

Recently, products in which furniture and household appliances are combined have appeared, and an under counter type refrigerator is a type of refrigerator that is installed on a table or sink located in the kitchen and has attracted many choices for the consumers.

Since the user takes out beverages or ingredients from the nearby refrigerator while the user eats at the dining table or cooks at the sink, convenience in use may be improved.

Information related to the prior art with respect to the under counter type refrigerator document is as follows.
1. Patent Publication Number (Date of Publication): Japanese Patent Application No. Hei 8-180968 (July 12, 1996) US 2008/156031 A1 relates to refrigeration appliances for use in residential kitchens.

EP 1 790 925 A2 relates to a refrigerator and a control method thereof, wherein a plurality of storage compartments are cooled based on their cooling priorities.

In the case of the under counter type refrigerator, since the refrigerator has to be installed at a height less than that of the table or sink, the refrigerator may be limited in size.

The refrigerator has to include components of a refrigeration cycle for generating cool air, i.e., a compressor, a heat exchanger, and a valve device. However, the refrigerator is limited in capacity of a storage compartment thereof due to a capacity of the machine room in which the components are installed.

Particularly, when a plurality of storage compartments are provided in the refrigerator, and two or more evaporators have to be installed so as to realize independent storage temperatures when different types of items are stored in the plurality of storage compartments, the storage compartment of the refrigerator may be limited due to volumes of the evaporator installation space and the machine room.

Condensed water may be generated on a surface of the evaporator due to a difference in temperature between the evaporator and the surrounding air, and thus, the condensed water may generate frost. To remove the frost, a defrosting operation has to be periodically performed in the refrigerator. In general, in the defrosting operation, a heater may be attached to the evaporator or disposed to be adjacent to the evaporator to perform defrosting through heat generation of the heater.

In the case of the under counter type refrigerator, since a relatively small evaporator is installed, a cooling capacity may not be large, and an amount of generated frost may not be large when compared to the general refrigerator. Thus, performing of the defrosting using a heater having a high heat generation amount may be inefficient in terms of power consumption.

Also, when the heater having the high heat generation amount is driven, cooling efficiency of a storage compartment may be reduced by the heat of the heater.

In addition, a separate space for installing the heater has to be provided. As a result, there is a limitation in that the storage compartment of the refrigerator is reduced in capacity due to the installation space of the heater.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. Embodiments provide an under counter type refrigerator, in which a compact machine room is realized to increase a capacity of the storage compartment.

Embodiments also provide an under counter type refrigerator in which a height of a machine room is relatively low so as not to largely reduce a capacity of a storage compartment even though the refrigerator decreases in height.

Embodiments also provide an under counter type refrigerator in which a heat dissipation passage of a machine room, through which air is suctioned forward into and discharged from the machine room, is provided.

Embodiments also provide an under counter type refrigerator, in which a machine room is divided into left and right sides with respect to a guide wall of the machine room, and a compressor and a condenser are respectively installed in the divided left and right spaces to improve space efficiency of components.

Embodiments also provide an under counter type refrigerator, in which a machine room has different heights to include a region having a relatively high height so that a compressor is disposed and a region, in which a condenser is disposed, to increase a capacity of a storage compartment.

Embodiments also provide an under counter type refrigerator, in which two evaporators are disposed to realize an independent temperature for each storage compartment.

Embodiments also provide an under counter type refrigerator in which, when a defrosting operation of an evaporator for cooling a storage compartment defining a temperature region of a refrigerating compartment is performed, a natural defrosting (forced convection) using air having a relatively high temperature, which exists in the storage compartment, is used.

Embodiments also provide an under counter type refrigerator in which switching of a valve and driving of an evaporation fan are performed in stages in a natural defrosting process to improve defrosting efficiency and prevent an adverse effect on a cooling operation.

Embodiments also provide an under counter type refrigerator, in which defrosting water generated in an evaporator is transferred to a machine room so as to be evaporated.

In an under counter type refrigerator according to an embodiment, when a defrosting period arrives, air of a storage compartment may be supplied to an evaporator to perform a defrosting operation (natural defrosting operation) for removing frost generated on the evaporator, thereby improving defrosting efficiency and reducing power consumption.

In the under counter type refrigerator, when the natural defrosting operation is performed, a compressor is turned off, and both the first and second outlet ports of a valve are opened to supply a high-temperature refrigerant to the first and second evaporators, thereby improving the defrosting efficiency.

In the under counter type refrigerator, the natural defrosting operation is divided into primary and secondary operations to perform an intermediate cooling operation between the primary and secondary operations, thereby preventing cooling performance of the storage compartment from being deteriorated.

In the under counter type refrigerator, the natural defrosting operation is performed until a temperature of the evaporator reaches a defrosting end reference temperature, and even though the temperature of the evaporator reaches the defrosting end reference temperature, if the temperature of the storage compartment is in a satisfaction state, the defrosting operation is performed till reaching a temperature dissatisfaction state to improve the defrosting efficiency.

In the under counter type refrigerator, when the defrosting operation of the first and second storage compartments is performed, if the defrosting of the first and second storage compartments are not completed even though the defrosting operation of the first and second storage compartments are ended, the cooling operation of the first storage compartment may not start until the defrosting of the second storage compartment is completed to improve the defrosting efficiency. That is, defrosting delay of the second storage compartment due to the cooling of the first storage compartment may be prevented.

In one embodiment, an under counter type refrigerator, which is installed in at least one or more storage spaces of a plurality of storage spaces in a kitchen furniture provided with a main body having a first width (W1) in a left and right direction, which is greater than a second width (W2) in a front and rear direction or a third width (W3) in a vertical direction, and the plurality of storage spaces arranged in the left and right direction, includes: a main body configured to define first and second storage compartments that constitute a refrigerating compartment; first and second evaporators configured to generate cool air supplied to the first and second storage compartments; first and second evaporation fans respectively provided at sides of the first and second evaporators to blow the cool air to the first and second storage compartments; a machine room provided in a lower portion of the main body to define an installation space in which a compressor and a condenser are provided; a valve disposed at an outlet-side of the condenser, the valve including a first outlet port configured to supply a refrigerant to the first evaporator and a second outlet port configured to supply the refrigerant to the second evaporator; and a controller configured to control an operation of the valve so that a cooling operation of the first storage compartment and a cooling operation of the second storage compartment are sequentially performed.

When a defrosting period arrives, the controller is configured to: turn off the compressor and drive the first evaporation fan so that defrosting of the first evaporator is performed so as to allow the cool air within the first storage compartment to be supplied to the first evaporator; and drive the second evaporation fan so that defrosting of the second evaporator is performed so as to allow the cool air within the second storage compartment to be supplied to the second evaporator.

The controller is configured to: drive the first and second evaporation fans to perform primary defrosting, in which the defrosting of the first evaporator and the defrosting of the second evaporator are performed; and drive the compressor and perform an intermediate cooling operation so as to cool the first and second storage compartments when a temperature of the first and second storage compartments is equal to or greater than a set temperature after the primary defrosting is completed.

After the intermediate cooling operation is performed, the controller is configured to drive the first and second evaporation fans and turn off the compressor to perform secondary defrosting, in which the defrosting of the first evaporator and the defrosting of the second evaporator are performed.

A defrosting operation end reference temperature during the secondary defrosting operation of the first and second evaporators is greater than a defrosting operation end reference temperature during the primary defrosting operation end temperature.

The controller may be configured to control the first and second evaporation fans so that an operation speed of each of the first and second evaporation fans during the secondary defrosting operation of the first and second evaporators is less than an operation speed of each of the first and second evaporation fans during the primary defrosting operation of the first and second evaporators.

The controller may be configured to open both the first and second outlet ports of the valve so that the refrigerant within the condenser is supplied to the first and second evaporators when the defrosting of the first and second evaporators is performed.

When the cooling operation of the first storage compartment is ended, the controller may be configured to: drive the first evaporation fan to perform the defrosting of the first evaporator with respect to the first storage compartment; and drive the second evaporation fan to perform the cooling operation of the second storage compartment.

The controller may be configured to open both the first and second outlet ports of the valve so that the refrigerant is supplied to the first and second evaporators when the cooling operation of the second storage compartment is ended while the first evaporation fan is driven to perform the defrosting of the first evaporator.

The controller may be configured to drive the second evaporation fan so as to perform the defrosting of the second evaporator with respect to the second storage compartment when the cooling operation of the second storage compartment is ended.

When the defrosting operation of the first and second evaporators is performed, the controller may delay starting of the intermediate cooling operation when a temperature of each of the first and second storage compartments is less than the set temperature even though a temperature of one evaporator of the first and second evaporators reaches a defrosting end reference temperature.

In another embodiment, a method provides for controlling an under counter type refrigerator, which is installed in at least one or more storage spaces of a plurality of storage spaces in a kitchen furniture provided with a main body having a first width (W1) in a left and right direction, which is greater than a second width (W2) in a front and rear direction or a third width (W3) in a vertical direction, and the plurality of storage spaces arranged in the left and right direction.

The under counter type refrigerator includes: a main body configured to define first and second storage compartments that constitute a refrigerating compartment; first and second evaporators configured to generate cool air supplied to the first and second storage compartments; first and second evaporation fans respectively provided at sides of the first and second evaporators to blow the cool air to the first and second storage compartments; a machine room provided in a lower portion of the main body to define an installation space in which a compressor and a condenser are provided; and a valve disposed at an outlet-side of the condenser, the valve including a first outlet port configured to supply a refrigerant to the first evaporator and a second outlet port configured to supply the refrigerant to the second evaporator.

The method for controlling the under counter type refrigerator includes: performing pre-cooling of closing the first and second outlet ports of the valve for a predetermined time when a defrosting period arrives during an operation of the refrigerator; perform an initial cooling operation of driving the compressor and the first and second evaporation fans so that the first and second storage compartments reach a temperature satisfaction state; and performing a defrosting operation of turning off the compressor and opening both the first and second outlet ports of the valve after the initial cooling operation is performed.

The performing of the defrosting operation may include: performing primary defrosting for the defrosting of the first and second evaporators; performing intermediate cooling for cooling the first and second storage compartments after the first defrosting; and performing secondary defrosting for the defrosting of the first and second evaporators after the intermediate cooling.

The performing of the initial cooling operation may include: opening the first outlet port of the valve and closing the second outlet port of the valve to cool the first storage compartment; and opening the second outlet port of the valve and closing the first outlet port of the valve to cool the second storage compartment after cooling the first storage compartment.

The performing of the defrosting operation may include: driving the first evaporation fan so that the cool air within the first storage compartment is supplied to the first evaporator when the cooling of the first storage compartment is ended; and driving the second evaporation fan so that the cool air within the second storage compartment is supplied to the second evaporator when the cooling of the second storage compartment is ended.

The performing of the pre-cooling may include opening both the first and second outlet ports of the valve until the initial cooling operation is performed when the set time elapses.

In another embodiment, an under counter type refrigerator, which is installed in at least one or more storage spaces of a plurality of storage spaces in a kitchen furniture provided with a main body having a first width (W1) in a left and right direction, which is greater than a second width (W2) in a front and rear direction or a third width (W3) in a vertical direction, and the plurality of storage spaces arranged in the left and right direction, includes: a main body configured to define first and second storage compartments that constitute a refrigerating compartment; first and second evaporators configured to generate cool air supplied to the first and second storage compartments; first and second evaporation fans respectively provided at sides of the first and second evaporators to blow the cool air to the first and second storage compartments; a machine room provided in a lower portion of the main body to define an installation space in which a compressor and a condenser are provided; a three-way valve disposed at an outlet-side of the condenser, the valve including a first outlet port configured to supply a refrigerant to the first evaporator and a second outlet port configured to supply the refrigerant to the second evaporator; and a controller configured to control an operation of the three-way valve so that a cooling operation of the first storage compartment and a cooling operation of the second storage compartment are sequentially performed, wherein, when a defrosting period arrives while the cooling operation of the first storage compartment or the cooling operation of the second storage compartment is performed, the controller is configured to: turn off the compressor and drive the first and second evaporation fans so as to perform primary defrosting of the first evaporator and the second evaporator; driving the compressor so as to perform intermediate cooling operation of the first and second storage compartments when a temperature of each of the first and second storage compartments is equal to or greater than a set temperature after the primary defrosting is completed; and turn off the compressor and drive the first and second evaporation fans so as to perform secondary defrosting of the first and second evaporators after the intermediate cooling operation is performed.

When the primary defrosting or the secondary defrosting of the first evaporator and the second evaporator is performed, the controller may be configured to allow the defrosting of the first evaporator and the defrosting of the second evaporator to sequentially start and stop the defrosting of the first evaporator and the defrosting of the second evaporator at the same time point.

When the cooling operation of the first storage compartment is ended, the controller may be configured to: close the first outlet port of the three-way valve and drive the first evaporation fan to perform the defrosting of the first evaporator with respect to the first storage compartment; and open the second outlet port of the three-way valve and drive the second evaporation fan to perform the cooling operation of the second storage compartment.

The controller may be configured to open both the first and second outlet ports of the valve and turn off the compressor so that the refrigerant is supplied to the first and second evaporators when the cooling operation of the second storage compartment is ended while the first evaporation fan is driven to perform the defrosting of the first evaporator.

When the primary defrosting operaton of the first and second evaporators is performed, the controller may delay starting of the intermediate cooling operation when a temperature of each of the first and second storage compartments is less than the set temperature even though a temperature of one evaporator of the first and second evaporators reaches a defrosting end reference temperature.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view illustrating a state in which an under counter type refrigerator is installed in a kitchen furniture according to an embodiment.
Fig. 2 is a view illustrating a state in which a door of the under counter type refrigerator is opened according to an embodiment.
Fig. 3 is a front view illustrating the state in which the under counter type refrigerator is installed in the kitchen furniture according to an embodiment.
Fig. 4 is a view illustrating an inner storage compartment and an arrangement of components of a refrigeration cycle in the state in which the door of the under counter type refrigerator is opened according to an embodiment.
FIG. 5 is a cross-sectional view taken along line 5-5' of FIG. 4.
Fig. 6 is a rear view of a machine room in the under counter type refrigerator according to an embodiment.
Fig. 7 is a plan view of the machine room to illustrate a flow of air according to an embodiment.
Fig. 8 is a system view illustrating a configuration of a refrigeration cycle in the refrigerator according to an embodiment.
Fig. 9 is a block diagram of the refrigerator according to an embodiment.
Fig. 10 is a diagram illustrating operations of a compressor, a valve, and an evaporation fan in stages when a natural defrosting operation of the refrigerator is performed according to an embodiment.
Fig. 11 is a flowchart illustrating a state in which the refrigerator is controlled in stages according to Fig. 10.

### DETAILED DESCRIPTION OF THE EMBODIMENTS

Hereinafter, exemplary embodiments will be described with reference to the accompanying drawings.

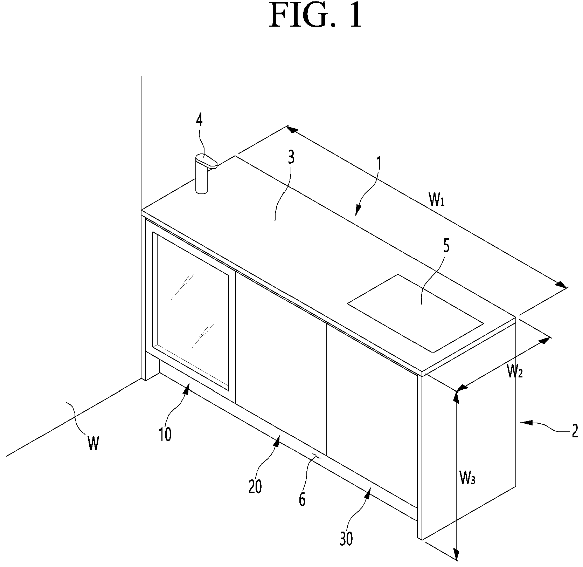

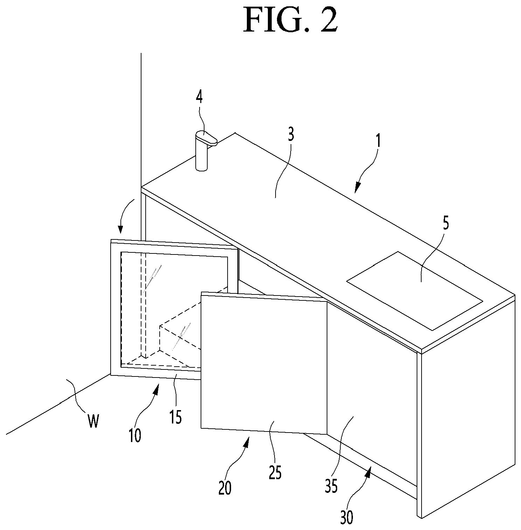

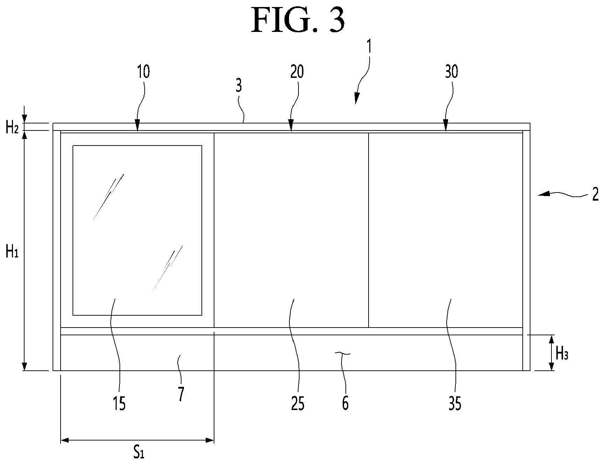

Fig. 1 is a perspective view illustrating a state in which an under counter type refrigerator is installed in a kitchen furniture according to an embodiment, Fig. 2 is a view illustrating a state in which a door of the under counter type refrigerator is opened according to an embodiment, and Fig. 3 is a front view illustrating the state in which the under counter type refrigerator is installed in the kitchen furniture according to an embodiment.

Referring to Figs. 1 to 3, an under counter type refrigerator according to an embodiment may be installed in the kitchen furniture 1.

For example, the kitchen furniture 1 may include a dining table that extends in one direction from a wall W in a region that is a boundary between the kitchen and the living room to eat or cook food. The kitchen furniture 1 may be referred to as an "Irish dining table".

The kitchen furniture 1 includes a substantially rectangular parallelepiped-shaped furniture body 2 and an upper plate 3 defining a top surface of the furniture 1.

A recess 6 is recessed towards the back from a front surface of the furniture body 1 to provide a wash board.

The recess 6 is provided with a lower cover 7. The lower cover 7 may be a cover that covers a lower front surface of the refrigerator. A through-hole through which air is suctioned into the refrigerator or discharged from the refrigerator may be defined in the lower cover 7.

The upper plate 3 may be coupled to an upper portion of the furniture body 2.

Kitchen facilities or household appliances may be installed on the upper plate 3. For example, a water purifier 4 and a cooking appliance 5 may be provided on the upper plate 3.

The furniture 1 may be determined in dimension by a width W1 in a first direction, a width W2 in a second direction, and a width W3 in a third direction. For example, the first direction may be a direction extending perpendicular to the wall W, and the width W1 in the first direction may define a length of the furniture 1 in a horizontal (left and right) direction and be adjusted according to a size of the kitchen or living room.

The width W2 in the second direction may define a length of the furniture 1 in a front and rear direction, and the width W3 in the third direction may define a height of the furniture 1.

In general, the width W1 in the first direction may be greater than each of the widths W2 and W3 in the second and third directions. Also, the width W3 in the third direction may be slightly larger than the width W2 in the second direction.

For example, the width W1 in the first direction may be determined in a range of about 1,000 mm to about 2,500 mm, the width W2 in the second direction may be determined in a range of about 500 mm to about 700mm, and the width W3 in the third direction may be determined in a range of about 700 mm to about 1,000 mm.

Each of the under counter type refrigerators 10, 20 and 30 may be installed in the furniture body 2. In other words, the under counter type refrigerators may constitute the furniture body 2.

The plurality of under counter type refrigerators may be provided in the furniture body 2. For example, the under counter type refrigerators include a first refrigerator 10, a second refrigerator 20, and a third refrigerator 3.

The first to third refrigerators 10, 20, and 30 may be arranged in the horizontal direction. The first to third refrigerators 10, 20, and 30 may be provided as separate refrigerators that are separated from each other to perform independent functions. For example, the first refrigerator 10 may be a refrigerator that stores drinks or wine. The second and third refrigerators 20 and 30 may be refrigerators that are dedicated as refrigerating compartments.

However, these types of refrigerators may be variously combined according to user preferences. Therefore, the types of refrigerators are not limited to that described above.

Also, although the first refrigerator 10, the second refrigerator 20, and the third refrigerator 30 are sequentially arranged in the drawings, the first refrigerator 10 may be disposed between the second and third refrigerators 20 and 30, unlike the above-described arrangement.

A first door 15 is provided on a front surface of the first refrigerator 10. The first door 15 may be hinge-coupled to a refrigerator body and rotates forward to be opened. Similarly, a second door 25 that is hinge-coupled to the refrigerator body and rotates forward to be opened is provided on a front surface of the second refrigerator 20.

The third refrigerator 30 includes a third door 35 provided to be withdrawable forward. A basket in which food is stored may be provided behind the third door 35.

An opening and closing manner of the refrigerator door, i.e., a rotating type or sliding type may be variously combined. For example, each of the first refrigerator 10 and the second refrigerator 20 may include a sliding door, and the third refrigerator 30 may include a rotating type door. Thus, the opening and closing manner of the refrigerator door are not limited to that described above.

Referring to Fig. 3, the height of the kitchen furniture 1 will be described.

The height of the kitchen furniture 1 should be provided with dimensions in which the user does not have any inconvenience when standing in front of the furniture 1 to cook food or sitting down to eat food. Also, when the user approaches the under counter type refrigerator to manipulate the door or withdraw food from the inside, it should be provided with dimensions that does not cause inconvenience.

For example, a first height H1 of the furniture body 2 may be in a range of about 800 mm to about 900 mm, a second height H2 of the upper plate 3 may be in a range of about 40 mm to about 60 mm, and a height of the recess 6 (the wash board) may be in a range of about 100 mm to about 150 mm.

The height of each of the under counter type refrigerators 10, 20, and 30 provided in the furniture body 2 may be in the range of the first height H1, and a width W1 of each of the refrigerators 10, 20, and 30 in the horizontal direction may be in a range of about 550 mm to about 600 mm.

As described above, each of the under counter type refrigerators 10, 20, and 30 have a limitation in that they have to be designed to be less in size than the general refrigerator.

The refrigerator has to include a refrigeration cycle component for generating cool air, i.e., a machine room equipped with a compressor and a condenser and an evaporator provided at one side of the storage compartment. The machine room and the evaporator are the main components that determine the performance of the refrigerator and need to be provided above a predetermined size.

Due to the limitations in the sizes of the refrigerator and main components, there is a limitation in that the storage compartment of the refrigerator is narrowed. In this embodiment, the above-described limitation may be solved through the configuration of the machine room, the proper arrangement of the evaporator, and the compact design of the heat dissipation passage.

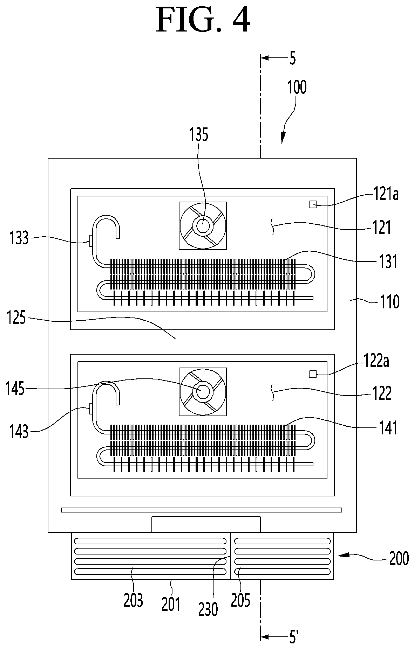

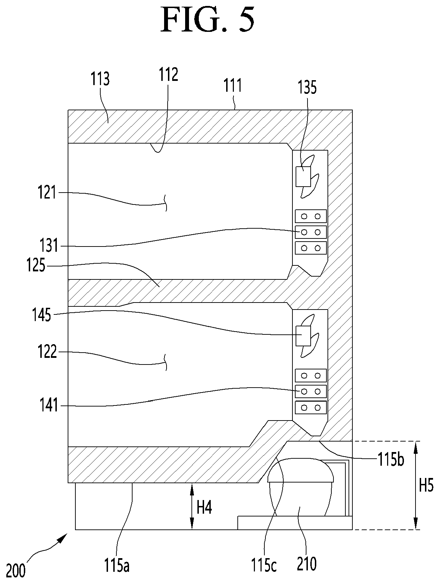

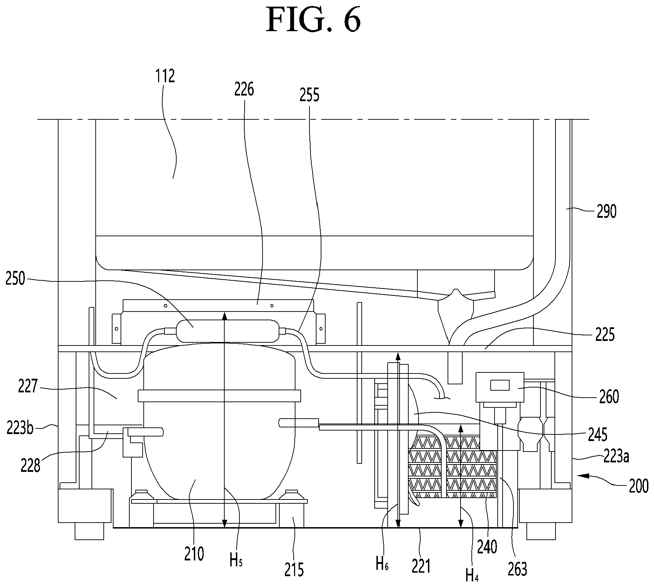

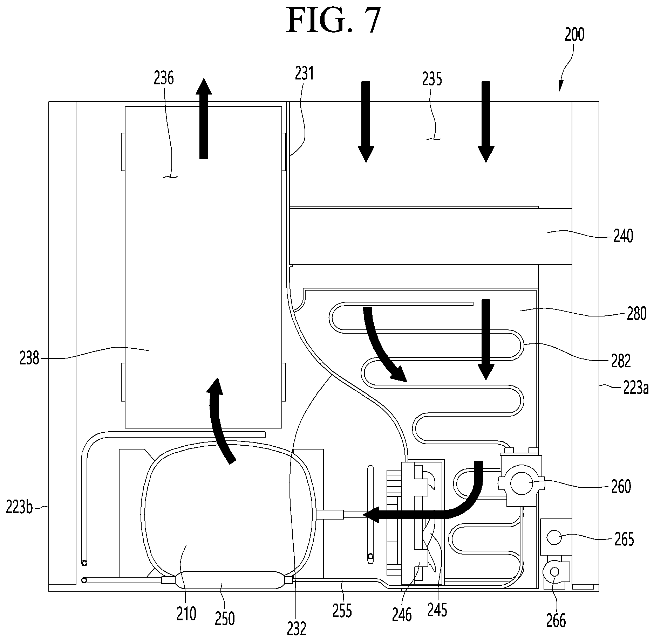

Fig. 4 is a view illustrating an inner storage compartment and an arrangement of components of a refrigeration cycle in the state in which the door of the under counter type refrigerator is opened according to an embodiment, FIG. 5 is a cross-sectional view taken along line 5-5' of FIG. 4, Fig. 6 is a rear view of the machine room in the under counter type refrigerator according to an embodiment, and Fig. 7 is a plan view of the machine room to illustrate a flow of air according to an embodiment.

Referring to Figs. 4 to 7, an under counter type refrigerator 100 according to an embodiment includes a main body 110 defining storage compartments 121 and 122. The main body 110 includes an outer case 111 defining an outer wall, an inner case 112 defining inner walls of the storage compartments 121 and 122, and an insulating material provided between the outer case 111 and the inner case 112.

The refrigerator 100 further include a barrier 125 that divides the storage compartments 121 and 122 into a first storage compartment 121 and a second storage compartment 122. For example, the first and second storage compartments 121 and 122 may be divided vertically by the barrier 125.

The first storage compartment 121 and the second storage compartment 122 may be configured as a refrigerating compartment having a temperature of above zero.

The first storage compartment 121 and the second storage compartment 122 may implement independent temperatures. That is, types of food stored in the first storage compartment 121 and the second storage compartment 122 may be different.

For example, food such as vegetables may be stored in one of the first and second storage compartments 121 and 122, and food such as meat may be stored in the other storage compartment. In this case, the temperature ranges of the first and second storage compartments 121 and 122 may be defined differently.

For another example, one of the first and second storage compartments 121 and 122 may be configured as a wine storage compartment to store wine, and the other may be configured as a beverage storage compartment to store beverages. In this case, the temperature ranges of the first and second storage compartments 121 and 122 may be defined differently.

Of course, the first and second storage compartments 121 and 122 may have the same temperature range to store the same kind of food.

The refrigerator 100 may include a temperature sensor that senses temperatures of the first and second storage compartments 121 and 122.

The temperature sensor includes a first storage compartment sensor 121a provided in the first storage compartment 121 and a second storage compartment sensor 122a provided in the second storage compartment 122.

The refrigerator 100 may further include a refrigeration cycle component that supplies cool air to the first and second storage compartments 121 and 122.

In detail, the refrigerator 100 further includes a first evaporator 131 and a first evaporation fan 135, which are installed at a rear wall of the first storage compartment 121, that is, in front of a rear side of the inner case 112. The first evaporation fan 135 may be disposed above the first evaporator 131.

When the first evaporation fan 135 is driven, the cool air of the first storage compartment 121 is cooled through the first evaporator 131, and then be supplied again to the first storage compartment 121 through the first evaporation fan 135.

Also, when the defrosting operation of the refrigerator 100 is performed, the air in the first storage compartment 121 may be supplied to the first evaporator 131 to remove frost generated on the first evaporator 131.

The refrigerator 100 further includes a first evaporator sensor 133 that senses a temperature of the first evaporator 131. The first evaporator sensor 133 may sense a temperature value of the first evaporator 131, which determines whether the natural defrosting operation is ended when the natural defrosting operation of the refrigerator 100 is performed.

The refrigerator 100 further includes a second evaporator 141 and a second evaporation fan 145, which are installed at a rear wall of the second storage compartment 122, that is, in front of a rear side of the inner case 112. The second evaporation fan 145 may be disposed above the second evaporator 141.

When the second evaporation fan 145 is driven, the cool air of the second storage compartment 122 is cooled through the second evaporator 141, and then be supplied again to the second storage compartment 122 through the second evaporation fan 145.

Also, when the defrosting operation of the refrigerator 100 is performed, the air in the second storage compartment 122 may be supplied to the second evaporator 141 to remove frost generated on the second evaporator 141.

The refrigerator 100 further includes a second evaporator sensor 143 that senses a temperature of the second evaporator 141. The second evaporator sensor 143 may sense a temperature value of the second evaporator 141, which determines whether the natural defrosting operation is ended when the natural defrosting operation of the refrigerator 100 is performed.

Although not illustrated in Fig. 4, a first evaporator cover for shielding the first evaporator 131 may be provided in front of the first evaporator 131, and the second evaporator cover for shielding the second evaporator 141 may be provided in front of the second evaporator 141.

The refrigerator 100 is provided with the main body 110 and further includes a machine room 200 in which a compressor 210 and a condenser 240 are installed.

The machine room 200 may be defined from a lower front end to a rear end of the refrigerator 100. Bottom surfaces 115a and 115b of the main body 110 may define an upper end of the machine room 200.

The bottom surfaces 115a and 115b of the main body 110 include a first bottom surface 115a defined on a front upper end of the machine room 200 and a second bottom surface 115b defined on a rear upper end of the machine room 200. The second bottom surface 115b is defined behind the first bottom surface 115a.

A heat dissipation passage through which air flows may be provided between the first bottom surface 115a and the lower end of the machine room 200.

A compressor 210 may be installed between the second bottom surface 115b and the lower end of the machine room 200. The compressor 210 may be installed on a lower plate 221, and a support damper 215 may be provided on a lower portion of the compressor 210 to reduce an intensity at which vibration generated by the compressor 210 is transmitted to the lower plate 221.

Since the compressor 210 has to be disposed at a predetermined height or more in its structure, a distance between the second bottom surface 115b and the lower end of the machine room 200 is relatively large.

In detail, a height H5 from the lower end of the machine room 200 to the second bottom surface 115b may be greater than a height H4 from the lower end of the machine room 200 to the first bottom surface 115a. Thus, the second bottom surface 115b may be disposed at a position that is higher than the first bottom surface 115a.

The bottom surface of the main body 110 further includes a third bottom surface 115c extending to be inclined upward from the first bottom surface 115a towards the second bottom surface 115b.

The front surface of the machine room 200 may define a front portion of the refrigerator 100. Air may be suctioned from the front side of the machine room 200, and then pass through the heat dissipation passage. Then, the air may be discharged to the front side of the machine room 200.

A front grill 201 through which air passes is provided in the front surface of the machine room 200. The front grill 201 includes a suction grill 203 as a "suction portion" for suctioning air and a discharge grill 205 as a "discharge portion" for discharging air. The suction grill 203 and the discharge grill 205 may be disposed at left and right sides.

The lower cover 7 described with reference to Fig. 3 may be provided in front of the front grill 201.

A number of components for driving the refrigeration cycle may be installed inside the machine room 200. The plurality of components include the compressor 210 compressing a refrigerant, the condenser 240 condensing the refrigerant compressed in the compressor 210, and a condensation fan 245 that forces a flow of air so as to suction or discharge the air through the suction grill 203 and the discharge grill 205.

The plurality of components further include a valve 260 that distributes the refrigerant condensed in the condenser 240 to the first evaporator 131 and the second evaporator 141. The valve 260 includes a three-way valve.

The inner space of the machine room 200 may be defined by a number of plates. The plurality of plates include the lower plate 221 that defines a bottom surface of the machine room 200 and provides an installation surface on which the plurality of components are installed.

The plurality of plates further include two side plates 223a and 223b extending upward from both sides of the lower plate 221. The two side plates 223a and 223b include a first side plate 223a and a second side plate 223b.

The plurality of plates further include a first upper plate 225 provided above the condensation fan 245. The first upper plate 225 may be disposed at a position that is slightly higher than an upper end of the condensation fan 245 and may be configured to cover the condensation fan 245. Also, the first upper plate 225 may extend parallel to the lower plate 221 by a predetermined length forward.

The plurality of plates further include a second upper plate 226 provided above the compressor 210. The upper end of the compressor 210 may have a height that is higher than that of the upper end of the condensation fan 245. Thus, the second upper plate 226 may be disposed at a position that is higher than the first upper plate 225. Also, the second upper plate 226 may extend parallel to the lower plate 221 by a predetermined length forward.

The second upper plate 226 may define a surface corresponding to the second bottom surface 115b of the main body 110. Thus, a distance from the lower plate 221 to the second upper plate 226 may be defined as a height H5.

The plurality of plates further include an inclined plate 227 inclining downward ifrom the first upper plate 225 and the second upper plate 226 in a forward direction. The inclined plate 227 may define a surface corresponding to the third bottom surface 115c of the main body 110.

The plurality of plates further include a front plate 228 extending forward from a lower end of the inclined plate 227. The front plate 228 may extend parallel to the lower plate 221.

The front plate 228 may define a surface corresponding to the first bottom surface 115a of the body 110. Accordingly, a distance H4 from the lower plate 221 to the front plate 228 may be defined as a height H4.

A distance from the lower plate 221 to the first upper plate 225 may be defined as a height H6. The height H6 may be greater than the height H4 and less than the height H5.

The first upper plate 225 is disposed to cover an upper side of each of the condensation fan 245 and the valve 260. The second plate 226 is disposed to cover an upper side of the compressor 210.

A dryer 250 that removes moisture or foreign substances from the condensed refrigerant may be provided between the upper end of the compressor 210 and the second plate 226. The dryer 250 may include a dryer body that is provided at a position higher than the first upper plate 225 to extend in the horizontal direction.

The components of the refrigeration cycle, which are disposed in the machine room 200, i.e., the compressor 210, the condenser 240, and the dryer 250 are connected by a refrigerant pipe 255 to guide refrigerant circulation in the components through the refrigerant pipe 255.

The refrigerator 100 further includes a drain pipe 290 that guides defrosting water or condensed water generated in the evaporators 131 and 141 to the inside of the machine room 200. A tray (not shown) that collects the defrosting water or condensed water may be provided under each of the evaporators 131 and 141, and the drain pipe 290 may be coupled to the tray to extend downward.

The drain pipe 290 may extend into an inner space of the machine room 200. The drain pipe 290 may be fixed by passing through any one of the plurality of plates.

For example, the drain pipe 290 may extend downward through the first upper plate 225. However, the penetration position of the drain pipe 290 is not limited thereto and may be arranged to pass through the inclined plate 227 or the front plate 228.

The inner space of the machine room 200 may be configured to be divided into a first space and a second space by a guide wall 230. The first and second spaces may be arranged at left and right sides, respectively.

When the refrigerator 100 is viewed from the front side, the machine room 200 may be divided into the left and right sides with respect to the guide wall 230, and the condenser 240 may be disposed in the first space 235 corresponding to the left side. Also, the control box 238 may be disposed in the second space 236 corresponding to the right side.

The control box 238 includes control components that control an operation of the refrigerator 100.

Air outside the refrigerator 100 is introduced into the first space 235 from a front side of the refrigerator 100 to cool the condenser 240. Also, the air may flow towards the back to cool the compressor 210 by being introduced into the second space 236 via the condensation fan 245 to cool the compressor 210 while passing through the compressor 210.

Thereafter, the air may pass through the control box 238 disposed in front of the compressor 210 to cool the control box 238, and then be discharged to the front side of the refrigerator 100.

The condensation fan 245 may be installed on the guide wall 230, the condenser 240 may be disposed in the first space 235, and the compressor 210 and the control box 238 may be disposed in the second space 236.

The first space 235 defines a suction passage as a suction-side space of the condensation fan 245, and the second space 236 defines a discharge passage as a discharge-side space of the condensation fan 245.

The condenser 240 and the valve 260 may be installed in the first space 235. The condenser 240 may be disposed in a front portion of the first space 235, and the valve 260 may be disposed in a rear portion of the first space 235. Also, the valve 260 may be disposed at an outlet-side of the condenser 240 based on an air flow.

A compressor 210 and a control box 238 may be disposed in the second space 236. The control box 238 may be disposed in a front portion of the second space 236 and the compressor 210 in a rear portion of the second space 236. Also, the control box 238 may be disposed at an outlet-side of the compressor 210 based on the air flow.

Since the first and second spaces 235 and 236 are divided into left and right sides so as to be lengthily defined from the front end to the rear end of the refrigerator 100, and the components of the refrigeration cycle may be installed at the left and right sides to reduce a height of the machine room 200.

Each of the storage compartments 121 and 122 may significantly increase in volume by the reduced height of the machine room 200, and each of the evaporators 131 and 141 provided on the rear walls of the storage compartments 121 and 122 may significantly increase in size.

A left and right width of the first space 235 may be defined to decrease towards the rear side of the machine room 200. For this, the guide wall 230 may be rounded or inclined towards the rear side.

In detail, the guide wall 230 includes a first part 231 linearly extending towards the back from the front end of the machine room 200 and a second part 232 extending to be rounded or inclined from the first part 231 so as to reduce a left and right width of the first space 235.

The condenser 240 may be disposed at one side, and the control box 238 may be disposed at the other side with respect to the first part 231.

A left and right width of the first space 235 may be greater than the left and right width of the second space 236 with respect to the first part 231. Also, the condenser 240 may be provided in the first space 235 defined at a side of the first part 231.

That is, since the left and right width of a front portion of the first space 235 in which the condenser 240 is provided is relatively large due to the first part 231, a size of the condenser 240 may be relatively large. Thus, heat dissipation performance of the refrigeration cycle may be improved.

An opposite side of the condenser 240, i.e., a left and right width of a front portion of the second space 236 with respect to the first part 231 may be relatively small so that the control box 238 that is easy to be manufactured by relatively reducing the width is installed therein.

The condenser 240 may be provided as a microchannel flat tube type heat exchanger (MF heat exchanger). The MF heat exchanger has a compact configuration and has an advantage of excellent efficiency.

The second part 232 may extend towards the back from the outlet side of the condenser 240 based on the air flow. The rear portion of the first space 235 may have a relatively small width due to the rounded or inclined configuration of the second part 232.

The width of the front portion of the first space 235, i.e., the left and right width of the first space 235 with respect to the first part 231 may be greater than the width of the rear portion, i.e., the left and right width of the first space 235 with respect to the second part 232.

Thus, a flow rate of air passing through the condenser 240 may increase and be suctioned into the condensation fan 240.

The rear portion of the second space 236 may have a relatively large width due to the configuration of the second part 232. Thus, the installation space of the components may be secured significantly. The compressor 210 having a relatively large size may be easily installed in the rear portion of the second space 236.

A defrosting water tray 280 is installed under the first space 235. Water discharged from the drain pipe 290 may drop into the defrosting water tray 280 to be stored. The defrosting water tray 280 may correspond to a shape of the guide wall 230 and be configured to be reduced in cross-sectional area towards the rear side. In other words, a cross-sectional area of a rear portion of the defroster tray 280 may be less than that of a cross-sectional area of the front portion.

The defrosting water tray 280 is provided with a tray pipe 282 that provides heat for evaporating the defrosting water. The tray pipe 282 may be placed on a top surface of the defrosting water tray 280. A high-temperature refrigerant compressed by the compressor 210 flows through the tray pipe 282 to assist in the evaporation of the defrosting water. Since the condenser 240 is provided at an outlet-side of the tray pipe 282, the refrigerant flowing through the tray pipe 282 may be introduced into the condenser 240, and then condensed.

A fan shroud 246 is provided at a rear side of the guide wall 230. In another aspect, the fan shroud 246 may be provided at a rear portion of the guide wall 230.

The condensation fan 245 is installed in the fan shroud 246. The condensation fan 245 may rotate inside the fan shroud 246 to generate an air flow.

A valve 260, a water pump 265, and a water valve 266 may be provided in the rear portion of the first space 235.

The refrigerator 100 may include a water purifier. The water pump 265 and the water valve 266 may be devices for supplying water to the water purifier. The water pump 265 and the water valve 266 may be installed on the first side plate 223a.

The valve 260 may be supported on the defrosting water tray 280. In detail, a valve bracket 263 may be provided above the defrosting water tray 280. The valve bracket 263 may extend upward from an upper end of the defrosting water tray 280 and be coupled to the valve 260.

Referring to Fig. 7, the heat dissipation passage through which air flows through the machine room 200 will be described. When the condensation fan 245 is driven, air outside the refrigerator is introduced into the first space 235 from the front side through the suction grill 203.

The air introduced into the first space 235 flows toward the back, passes through the condenser 240, and passes through an upper space of the defrosting water tray 280 to assist in the evaporation of the defrosting water.

The air may be suctioned into the condensation fan 245 and be switched laterally from the first space 235 towards the second space 236. The air discharged from the condensation fan 245 may cool the compressor 210 while passing through the compressor 210.

The air passing through the compressor 210 changes in direction to flow to the front side to cool the control box 238 while passing through the control box 238 disposed in front of the compressor 210.

The air passing through the control box 238 may flow forward and be discharged to the front side of the refrigerator through the discharge grill 205.

A refrigerant flow will be described below.

The high-temperature refrigerant compressed by the compressor 210 flows through a tray pipe 282 to assist in the evaporation of the defrosting water stored in the defrosting water tray 280.

The refrigerant passing through the tray pipe 282 may be introduced into the condenser 240 and condensed, and then, moisture or foreign substances may be separated from the refrigerant while the refrigerant passes through the dryer 250.

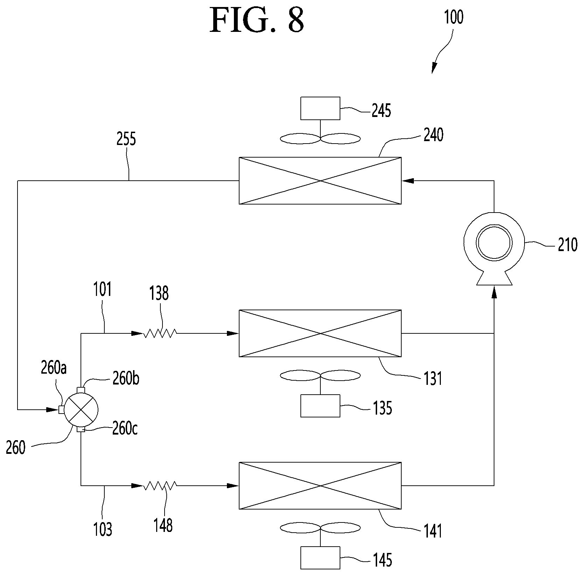

The refrigerant passing through the dryer 250 flows into the valve 260 and is branched from the valve 260 to flow towards the first and second evaporators 231 and 241. Capillary tubes 138 and 148 (see Fig. 8) may be provided at an inlet-side of each of the first and second evaporators 231 and 241, and the refrigerant may be decompressed in the capillary tubes 138 and 148, and then be introduced into the first and second evaporators 231 and 241 and be evaporated.

The refrigerant evaporated in the first and second evaporators 231 and 241 may be suctioned again into the compressor 210, and thus, the circulation described above may be repeated.

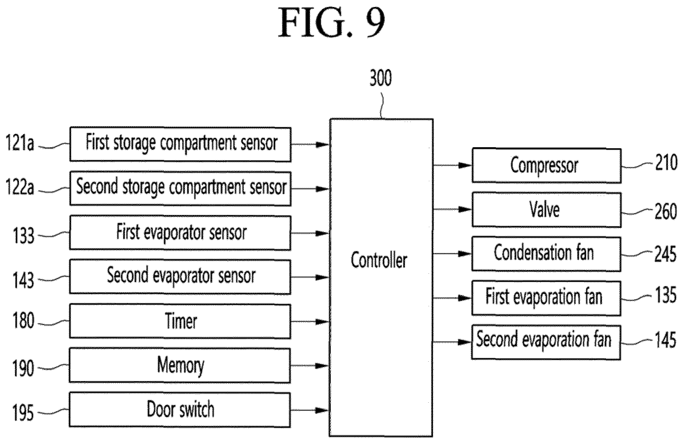

Fig. 8 is a system view illustrating a configuration of a cycle in the refrigerator according to an embodiment, and Fig. 9 is a block diagram of the refrigerator according to an embodiment.

First, referring to Fig. 8, the refrigerator 100 according to an embodiment includes a compressor 210 that compresses a refrigerant, a condenser 240 that condenses the refrigerant compressed in the compressor 210, a valve 260 provided at an outlet-side of the condenser 240, and first and second evaporators 131 and 141 into which the refrigerant branched in the valve 260 is introduced.

The refrigerator 100 further includes a refrigerant pipe 255 that connects the compressor 210, the condenser 240, the valve 260, and the first and second evaporators 131 and 141 to each other to guide a flow of the refrigerant.

A condensation fan 245 is provided at one side of the condenser 240 to induce heat dissipation of the condenser 240, and first and second evaporation fans 135 and 145 are respectively provided at sides of the first and second evaporators 131 and 141 to assist in the evaporation of the refrigerant.

The valve 260 may be provided as a three-way valve having one inlet port 260a and two outlet ports 260b and 260c. The outlet-side refrigerant pipe of the condenser 240 may be connected to the inlet port of the valve 260.

The refrigerator 100 includes a first inlet passage 101 connected to the first outlet port 260b of the valve 260 to extend to the first evaporator 131 and a second inlet passage 103 connected to the second outlet port 260c of the valve 260 to extend to the second evaporator 141. The first and second inlet passages 101 and 103 constitute a portion of the refrigerant pipe 255.

An expansion device that decompresses the refrigerant to be introduced into the first and second evaporators 131 and 141 may be installed in the first and second inlet passages 101 and 103. The expansion device includes a capillary tube. In detail, the expansion device includes a first capillary tube 138 installed in the first inlet passage 101 to decompress the refrigerant to be introduced into the first evaporator 131 and a second capillary tube 148 installed in the second inlet passage 103 to decompress the refrigerant to be introduced into the second evaporator 141.

The valve 260 may be controlled to open any one of the first and second outlet ports 260a and 260b, and the refrigerant introduced into the valve 260 may be introduced into the respective evaporator through the opened any one of the first and second outlet ports 260a and 260b. Thus, any one of the first and second storage compartments 121 and 122 may be cooled.

For example, when the first outlet port 260a is opened, the refrigerant may be introduced into the first evaporator 131 through the first outlet port 260a, and cool air generated in the first evaporator 131 may be supplied to the first storage compartment 121. Here, the first evaporation fan 135 may be driven to allow the cool air to circulate in a peripheral space of the first evaporator 131 and the first storage compartment 121.

For another example, when the second outlet port 260b is opened, the refrigerant may be introduced into the second evaporator 141 through the second outlet port 260b, and cool air generated in the second evaporator 141 may be supplied to the second storage compartment 122. Here, the second evaporation fan 145 may be driven to allow the cool air to circulate in a peripheral space of the second evaporator 141 and the second storage compartment 122.

The outlet-side pipe of the first evaporator 131 and the outlet-side pipe of the second evaporator 141 are combined with each other to constitute a suction pipe of the compressor 210. Thus, the refrigerant evaporated from the first evaporator 131 and/or the second evaporator 141 may be sucked into the compressor 210 through the suction pipe.

Next, referring to Fig. 9, the refrigerator 100 according to an embodiment includes a first storage compartment sensor 121a that senses a temperatures of the first storage compartment 121 and a second storage compartment sensor 122a that sense a temperature of the second storage compartment 122.

The refrigerator 100 includes a first evaporator sensor 133 that senses a temperature of the first evaporator 131 and a second evaporator sensor 143 that senses a temperature of the second evaporator 141. The first evaporator sensor 133 and the second evaporator sensor 143 may be attached to the first evaporator 131 and the second evaporator 141, respectively.

The refrigerator 100 further includes a timer 180 for integrating times related to the operation of the refrigerator. For example, the timer 180 may integrate an operation time of the compressor 210, an on/off time of each of the first and second outlet ports of the valve 260, and a driving time of each of the condensation fan 245 and the first and second evaporation fans 135 and 145, which constitute the refrigeration cycle.

For the defrosting operation of the refrigerator 100, the timer 180 may integrate the operation time of the refrigerator 100, which is capable of determining whether a predetermined defrosting period arrives. Here, the operation time of the refrigerator 100 may be a time that elapses after power of the refrigerator 100 is turned on.

The refrigerator 100 further includes a memory 190 that stores driving information of the refrigerator 100. The memory 190 may include information related to the period of the defrosting operation.

The period of the defrosting operation may be determined in consideration of a subtraction value according to a door opening time in the basic period. Whether a door of the refrigerator is opened may be determined according to whether a door switch 195 is turned on or off.

The door switch 195 may be provided on a front surface of the main body of the refrigerator and may be provided to be in contact with the door. When the door is closed, the door switch 195 may be turned on, and when the door is opened, the door switch 195 may be turned off. Also, the turn-off time of the door switch 195 may be integrated by the timer 180.

For example, the subtraction value may be determined as a ratio of about 7 minutes per second during the time when the door is opened. For example, if the basic period is about 24 hours, when the opening time of the refrigerator door is about 1 minute, about 420 minutes (about 7 hours) may be subtracted, and thus, the defrosting start period may be determined as about 17 hours after the refrigerator operation is performed after the previous defrosting operation is ended.

The refrigerator 100 further include a controller 300 that controls the operations of the components of the refrigeration cycle, i.e., the compressor 210, the valve 260, the condensation fan 245, and the first and second evaporation fans 135 and 145 on the basis of information transmitted from the temperature sensors 121a, 122a, 133, and 143, the timer 180, the memory 190, and the door switch 195. The controller 300 may be an electronic processor.

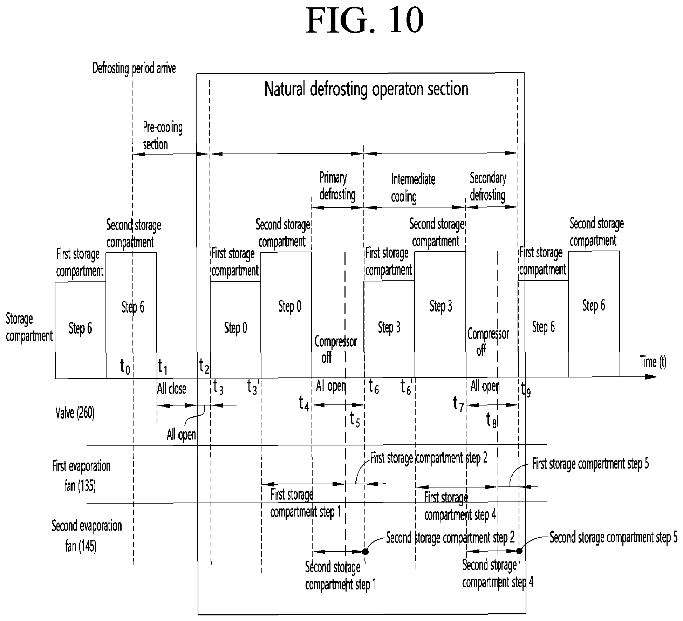

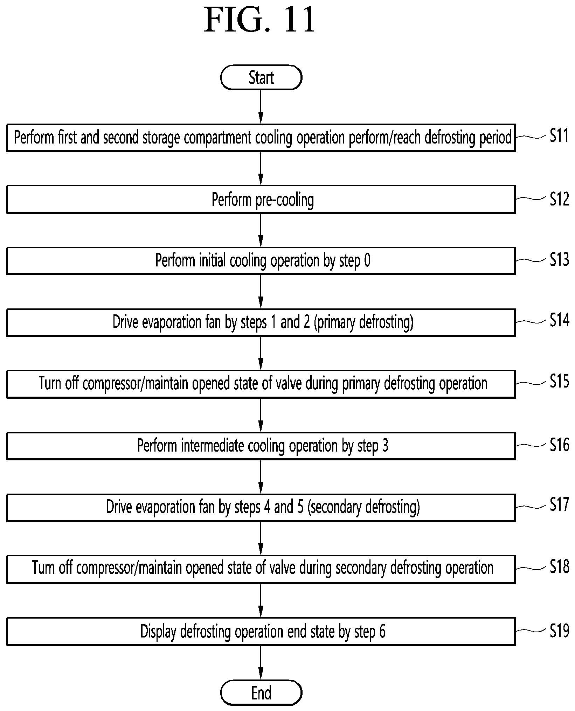

Fig. 10 is a diagram illustrating operations of the compressor, the valve, and the evaporation fan in stages when the natural defrosting operation of the refrigerator is performed according to an embodiment, and Fig. 11 is a flowchart illustrating a state in which the refrigerator is controlled in stages according to Fig. 10. The control may be performed by the controller 300.

Referring to Figs. 10 and 11, the refrigerator 100 according to an embodiment may be controlled so that the first storage compartment 121 and the second storage compartment 122 are alternately cooled. For example, the first storage compartment 121 may operate first for a first set time, and then, the second storage compartment 122 may sequentially operate for a second set time (see Step 6 of the first and second storage compartments).

In detail, when the first storage compartment 121 operates (when the cool air is supplied), the compressor 210 may be driven, and the valve 260 may be switched into a first operation mode to open the first outlet port 260b of the valve 260 and close the second outlet port 260c. Thus, the refrigerant may be introduced into the first evaporator 131, and then evaporated, and the cool air generated around the first evaporator 131 may be supplied to the first storage compartment 121.

However, in an operation section of the first storage compartment 121, when the temperature of the first storage compartment 121 is maintained below a set temperature (in a temperature satisfaction state), the compressor 210 may be turned off, and when the temperature of the first storage compartment 121 is above the set temperature (in a temperature dissatisfaction state), the compressor 210 may be turned on and driven.

When the first storage compartment 121 is in the "temperature satisfaction state", a state when the first set time elapses, the operation of the second storage compartment 122 is performed. On the other hand, if the first storage compartment 121 is in the "temperature dissatisfaction state" at a time point at which the first set time elapses, the operation of the second storage compartment 122 may be delayed until the "temperature satisfaction state" arrives at the first storage compartment 121.

When the second storage compartment 122 operates (when the cool air is supplied), the compressor 210 may be driven, and the valve 260 may be switched into a second operation mode to open the second outlet port 260c of the valve 260 and close the first outlet port 260b. Thus, the refrigerant may be introduced into the second evaporator 141, and then evaporated, and the cool air generated around the second evaporator 141 may be supplied to the second storage compartment 122.

However, in an operation section of the second storage compartment 122, when the temperature of the second storage compartment 122 is maintained below the set temperature (in the temperature satisfaction state), the compressor 210 may be turned off, and when the temperature of the second storage compartment 122 is above the set temperature (in the temperature dissatisfaction state), the compressor 210 may be turned on and driven.

In Step 6 of the first and second storage compartments 121 and 122, the defrosting period may arrive (time t0). It is understood that the arrival of the defrosting period is the arrival to a start point at which the defrosting is performed (S11).

When the defrosting period arrives, pre-cooling is performed. The pre-cooling operation may be an operation for a period (a pre-cooling section) from the time t0, at which the defrosting period arrives, to a time t3 at which a next operation of the first storage compartment 121 starts.

The pre-cooling operation may include a control for delaying the defrosting operation until the first and second storage compartments 121 and 122 arrive in the "temperature satisfaction state" when the defrosting period arrives during the operations of the first and second storage compartments 121 and 122.

For example, as illustrated in Fig. 10, when the defrosting period arrives during the operation of the second storage compartment 122, the defrosting operation may not start immediately but be delayed until the first and second storage compartments 122 arrive in the "temperature satisfaction state". Of course, if the second storage compartment 122 is in the "temperature satisfaction state" at the time t0, the defrosting operation may be performed immediately without delay.

On the other hand, when the defrosting period arrives during the operation of the first storage compartment 121, if the first and second storage compartments 121 and 122 are in the "temperature satisfaction state", the defrosting operation is performed immediately without delay. On the other hand, when any one of the first and second storage compartments 121 and 122 is in the "temperature dissatisfaction state", the defrosting operation may be delayed until the operation of the corresponding storage compartment is performed so that both the first and second storage compartments 121 and 122 arrive in the "temperature satisfaction state".

When the first and second storage compartments 121 and 122 are in the "temperature satisfaction state" at a time t1, the compressor 210 is turned off, and both the first and second outlet ports 260b and 260c of the valve 260 are closed. Thus, the introduction of the refrigerant into the first and second evaporators 131 and 141 may be stopped. The control of the compressor 210 and the valve 260 may be performed for a set time t2-t1.

When a time t2 arrives after the set time elapses, the valve 260 may be controlled so that both the first and second outlet ports 260b and 260c are opened. As the first and second outlet ports 260b and 260c are opened, the refrigerant existing in the condenser 240 that is a high-pressure side of the refrigerant cycle may be collected to the evaporators 131 and 141 and the compressor 210, which are a low-pressure side of the refrigerant cycle. Also, a pressure difference between the high pressure and the low pressure of the refrigerant cycle may be reduced to generate an equilibrium pressure. This control may be performed till the time t3, i.e., until reaching an end point in the pre-cooling section (S12).

When the pre-cooling operation is ended, an initial cooling operation (see Step 0) of the first and second storage compartments 121 and 122 may be performed. Since the cooling of the first and second storage compartments 121 and 122 is stopped in the pre-cooling section, the first and second storage compartments 121 and 122 may be in the "temperature dissatisfaction state". To solve this limitation, the initial cooling operation may be performed.

The initial cooling operation may be performed in the same operation manner as Step 6 operation of the first and second storage compartments 121 and 122. That is, the compressor 210 may be driven to sequentially operate in the first and second storage compartments 121 and 122 according to the switching of the first and second operating modes of the valve 260.

According to the initial cooling operation, the first storage compartment 121 may be in the "temperature dissatisfaction state", and when the "temperature satisfaction state" arrives, the initial cooling operation of the first storage compartment 121 may be ended at a time t3'.

Also, according to the initial cooling operation, the second storage compartment 122 may be in the "temperature dissatisfaction state", and when the "temperature satisfaction state" arrives, the initial cooling operation of the second storage compartment 122 may be ended at a time t4 (S13).

When the initial cooling operation is ended, the primary defrosting operation (see Steps 1 and 2) is performed. The primary defrosting operation may be performed separately for each storage compartment.

In detail, when the initial cooling operation of the first storage compartment 121 is ended at a time t3', the first evaporation fan 135 may be driven for the defrosting of the evaporator according to Step 1. According to the driving of the first evaporation fan 135, air existing in the first storage compartment 121 may be supplied towards the first evaporator 131 to perform the defrosting (the natural defrost operation by forced convection).

The first evaporation fan 135 may operate at a high rate. For example, a voltage applied to the first evaporation fan 135 may ranges of about 10 V to about 15 V.

The driving of the first evaporation fan 135 may be performed until the temperature of the first evaporator 131 reaches the defrost end reference temperature. If the temperature of the first evaporator 131 does not reach a defrosting end reference temperature until the defrosting end reference time elapses, the driving of the first evaporation fan 135 according to Step 1 may be stopped when the defrosting end reference time elapses.

For example, the defrosting end reference temperature may be about 3°C, and the defrosting end reference time may be about 480 minutes.

A time at which the driving of the first evaporation fan 135 is stopped is defined as a time t5.

According to the above control, the defrosting operation according to Step 1 may be performed on the first storage compartment 121 until reaching the time t4 after the time t3', and the cooling operation according to Step 0 may be performed on the second storage compartment 122. That is, the cooling and the defrosting operations of the first and second storage compartments 121 and 122 may be simultaneously performed.

When the initial cooling operation of the second storage compartment 122 is ended at the time t4, the second evaporation fan 145 may be driven for the defrosting of the evaporator according to Step 1. According to the driving of the second evaporation fan 145, air existing in the second storage compartment 122 may be supplied towards the second evaporator 141 to perform the defrosting (the natural defrost operation by forced convection).

The second evaporation fan 145 may operate at a high rate. For example, a voltage applied to the second evaporation fan 145 may ranges of about 10 V to about 15 V.

The driving of the second evaporation fan 145 may be performed until the temperature of the second evaporator 141 reaches the defrost end reference temperature. If the temperature of the second evaporator 141 does not reach a defrosting end reference temperature until the defrosting end reference time elapses, the driving of the second evaporation fan 145 according to Step 1 may be stopped when the defrosting end reference time elapses.

For example, the defrosting end reference temperature may be about 3°C, and the defrosting end reference time may be about 480 minutes.

In the period from the time t4 to the time t5, the first and second evaporation fans 135 and 145 may be driven together, and in this process, the natural defrosting operations of the first and second storage compartments 121 and 122 may be simultaneously performed.

In the primary defrosting operation, the compressor 210 may be turned off, and the first and second outlet ports 260b and 260c of the valve 260 may be controlled to be opened. This control may be performed from the time t4 to a time t6 at which the intermediate cooling operation starts.

In detail, the compressor 210 is turned off at a time t4 at which the cooling operations of the first and second storage compartments 122 are ended, and the refrigerant circulation in the refrigeration cycle may be stopped. Also, both the first and second outlet ports 260b and 260c of the valve 260 are opened so that the refrigerant having the relatively high temperature, which exists at the high-pressure side of the cycle, may be supplied to the first and second evaporators 131 and 141. Thus, defrosting efficiency of the first and second evaporators 131 and 141 may be improved.

When the natural defrosting operation of the first evaporator 131 according to Step 1 is ended at the time t5, the control according to Step 2 is performed. The control according to Step 2 may be a control that is maintained in a state in which the driving of the first evaporation fan 135 is stopped, the compressor 210 is turned off, and both the first and second outlet ports 260b and 260c of the valve 260 are opened.

The control of the first evaporator 131 according to Step 2 may be performed till the time t6, i.e., until all the defrosting operations of the first and second evaporators 131 and 141 according to Step 1 from the defrosting operation end point t5 are ended.

In the case of the second evaporator 141, the natural defrosting operation according to Step 1 may be performed from the time t4 to the time t6, and the control according to Step 2 may not be separately performed but be ended together when the natural defrosting operation of the second evaporator 141 according to Step 1 is ended (S14 and S15).

When a primary defrosting operation is ended at the time t6, the intermediate cooling operations of the first and second storage compartments 121 and 122 may be performed (Step 3). However, if the first and second storage compartments 121 and 122 are in the "temperature satisfaction state", the need for the intermediate cooling operation may not be extensive at the time point at which the primary defrosting operation is ended. Thus, at this time, the intermediate cooling operation may be delayed until the first and second storage compartments 121 and 122 arrive in the "temperature dissatisfaction state".

The intermediate cooling operations of the first and second storage compartments 121 and 122 may be performed in the same operation as the initial cooling operation according to Step 0 in operation S13. In detail, in the process of performing the primary defrosting operation, the first and second storage compartments 121 and 122 may be in the "temperature dissatisfaction state" because the cooling of the first and second storage compartments 121 and 122 are stopped.

To solve this limitation, the intermediate cooling operation may be performed. When the intermediate cooling operation is performed, the compressor 210 may be driven to sequentially operate in the first and second storage compartments 121 and 122 according to the switching of the first and second operating modes of the valve 260.

According to the intermediate cooling operation, the first storage compartment 121 may be in the "temperature dissatisfaction state", and when the "temperature satisfaction state" arrives, the intermediate cooling operation of the first storage compartment 121 may be ended at a time t6'.

Also, according to the intermediate cooling operation, the second storage compartment 122 may be in the "temperature dissatisfaction state", and when the "temperature satisfaction state" arrives, the intermediate cooling operation of the second storage compartment 122 may be ended at the time t7 (S16).

When the intermediate cooling operation is ended, a secondary defrosting operation (see Steps 4 and 5) is performed.

As described above, since the intermediate cooling operation is performed between the primary and secondary defrosting operations, it is possible to prevent the cooling performance of the first and second storage compartments 121 and 122 from being deteriorated.

The secondary defrosting operation is performed separately for each storage compartment and may be substantially similar to the primary defrosting operation.

In detail, when the intermediate cooling operation of the first storage compartment 121 is ended at a time t6', the first evaporation fan 135 may be driven for the defrosting of the first evaporator 131 according to Step 4. According to the driving of the first evaporation fan 135, air existing in the first storage compartment 121 may be supplied towards the first evaporator 131 to perform the defrosting.

The first evaporation fan 135 may operate at a low rate. For example, a voltage applied to the first evaporation fan 135 may have a range of about 3 V to about 6 V.

The driving of the first evaporation fan 135 may be performed until the temperature of the first evaporator 131 reaches the defrost end reference temperature. If the temperature of the first evaporator 131 does not reach a defrosting end reference temperature until the defrosting end reference time elapses, the driving of the first evaporation fan 135 according to Step 4 may be stopped when the defrosting end reference time elapses.

For example, the defrosting end reference temperature may be about 5°C, and the defrosting end reference time may be about 480 minutes. Since the secondary defrosting operation is performed as an additional defrosting operation, the defrosting end reference temperature (the second reference temperature) in the secondary defrosting operation may be greater than the reference temperature (the first reference temperature) in the primary defrosting operation.

A time at which the driving of the first evaporation fan 135 is stopped is defined as a time t8.

According to the above control, the defrosting operation according to Step 4 may be performed on the first storage compartment 121 until reaching the time t8 after the time t7, and the cooling operation according to Step 3 may be performed on the second storage compartment 122. That is, the defrosting operation of the first storage compartment 121 and the cooling operation of the second storage compartment 122 may be simultaneously performed.

When the intermediate cooling operation of the second storage compartment 122 is ended at the time t7, the second evaporation fan 145 may be driven for the defrosting of the evaporator according to Step 4. According to the driving of the second evaporation fan 145, air existing in the second storage compartment 122 may be supplied towards the second evaporator 141 to perform the defrosting.

The second evaporation fan 145 may operate a low rate. For example, a voltage applied to the first evaporation fan 135 may have a range of about 3 V to about 6 V.

The driving of the second evaporation fan 145 may be performed until the temperature of the second evaporator 141 reaches the defrost end reference temperature. If the temperature of the second evaporator 141 does not reach a defrosting end reference temperature until the defrosting end reference time elapses, the driving of the second evaporation fan 145 according to Step 4 may be stopped when the defrosting end reference time elapses.

For example, the defrosting end reference temperature may be about 5°C, and the defrosting end reference time may be about 480 minutes. Since the secondary defrosting operation is performed as an additional defrosting operation, the defrosting end reference temperature (the second reference temperature) in the secondary defrosting operation may be greater than the reference temperature (the first reference temperature) in the primary defrosting operation.

In the period from the time t4 to the time t8, the first and second evaporation fans 135 and 145 may be driven together, and in this process, the natural defrosting operations of the first and second storage compartments 121 and 122 may be simultaneously performed.

In the secondary defrosting operation, the compressor 210 may be turned off, and the first and second outlet ports 260b and 260c of the valve 260 may be controlled to be opened. This control may be performed from the time t7 to a time t9 at which the cooling operation according to Step 6 starts.

In detail, the compressor 210 is turned off at a time t7 at which the cooling operations of the first and second storage compartments 122 are ended, and the refrigerant circulation in the refrigeration cycle may be stopped. Also, both the first and second outlet ports 260b and 260c of the valve 260 are opened so that the refrigerant having the relatively high temperature, which exists at the high-pressure side of the cycle, may be supplied to the first and second evaporators 131 and 141. Thus, defrosting efficiency of the first and second evaporators 131 and 141 may be improved.

When the natural defrosting operation of the first evaporator 131 according to Step 4 is ended at the time t8, the control according to Step 5 is performed. The control according to Step 5 may be a control that is maintained in a state in which the driving of the first evaporation fan 135 is stopped, the compressor 210 is turned off, and both the first and second outlet ports 260b and 260c of the valve 260 are opened.

The control of the first evaporator 131 according to Step 5 may be performed till the time t9, i.e., until all the defrosting operations of the first and second evaporators 131 and 141 according to Step 4 from the defrosting operation end point t8 are ended.

In the case of the second evaporator 141, the natural defrosting operation according to Step 4 may be performed from the time t7 to the time t9, and the control according to Step 5 may not be separately performed but be ended together when the natural defrosting operation of the second evaporator 141 according to Step 4 is ended (S17 and S18).

When the secondary defrosting operation is ended at the time t9, the defrosting operation period may be initialized, and the time may be newly integrated. Then, the refrigerator displays information that indicates the state in which the defrosting operation is ended, and the cooling operations (cooling operation according to Step 6) of the first and second storage compartments 121 and 122 described in Step S11 may be performed (S19).

However, if the first and second storage compartments 121 and 122 are in the "temperature satisfaction state", the need for the cooling operations of the first and second storage compartments may not be extensive at the time point at which the secondary defrosting operation is ended. Thus, at this time, the cooling operation may be delayed until the first and second storage compartments 121 and 122 arrive in the "temperature dissatisfaction state".

As described above, the power consumption may be reduced due to the natural defrosting operation of the first and second evaporators 131 and 141 when compared to the defrosting using a heater, and the installation space for the components of the refrigeration cycle may be reduced to relatively increase in volume of the storage compartment.

According to the above-described technical solutions, the compact machine room may be realized to increase in capacity of the storage compartment. Particularly, the height of the machine room may be relatively low so as not to largely reduce the capacity of the storage compartment even though the refrigerator decreases in height.

The heat dissipation passage of the machine room, through which the air is suctioned forward into and discharged from the machine room, may be provided.

The machine room may be divided into the left and right sides with respect to the guide wall of the machine room, and the compressor and the condenser may be respectively installed in the divided left and right spaces to improve the space efficiency of the components.

In this embodiment, the machine room may have the different heights. A region having a relatively high height so that the compressor is disposed and a region having a relatively low height in which the condenser is disposed, to increase a capacity of the storage compartment.

In this embodiment, the two evaporators may be disposed to realize the independent temperatures for each storage compartment, and particularly, realize the freezing compartment.

When the defrosting operation of the evaporator for cooling the storage compartment defining the temperature region of the refrigerating compartment is performed, the natural defrosting (forced convection) using the air having the relatively high temperature, which exists in the storage compartment, may be used to improve the defrosting efficiency and reduce the power consumption.

The switching of the valve and the driving of the evaporation fan may be performed in stages in the natural defrosting process to improve the defrosting efficiency and prevent the adverse effect on the cooling operation.

In this embodiment, the defrosting water generated in the evaporator may be transferred to the machine room, and then be evaporated.

## Claims

1. An under counter type refrigerator (100) capable of being installed in a storage space of a kitchen furniture, the under counter type refrigerator (100) comprising:
a main body (110) defining first and second storage compartments (121, 122) that constitute a refrigerating compartment;
first and second evaporators (131, 141) to generate cool air supplied to the first and second storage compartments (121, 122);
first and second evaporation fans (135, 145) respectively provided at sides of the first and second evaporators (131, 141) to blow the cool air to the first and second storage compartments (121, 122);
a machine room (200) provided at a lower portion of the main body (110) to define an installation space in which a compressor (210) and a condenser (240) are provided;
a valve (260) disposed at an outlet-side of the condenser (240), the valve (260) comprising a first outlet port (260a) to supply a refrigerant to the first evaporator (131) and a second outlet port (260b) to supply the refrigerant to the second evaporator (141); and
a controller (300) configured to control an operation of the valve (260) so that a cooling operation of the first storage compartment (121) and a cooling operation of the second storage compartment (122) are performed,
**characterized in that**:
when a defrosting period arrives, the controller (300) is configured to:
turn off the compressor (210) and drive the first evaporation fan (135) so that defrosting of the first evaporator (131) is performed by allowing the cool air within the first storage compartment (121) to be supplied to the first evaporator (131); and
drive the second evaporation fan (145) so that defrosting of the second evaporator (141) is performed by allowing the cool air within the second storage compartment (122) to be supplied to the second evaporator (141),
wherein the controller is configured to:
drive the first and second evaporation fans (135, 145) to perform primary defrosting operation, in which the defrosting of the first evaporator (131) and the defrosting of the second evaporator (141) are performed while the compressor (210) is turned off; and
drive the compressor (210) to perform an intermediate cooling operation so as to cool the first and second storage compartments (121, 122) when a temperature of the first and second storage compartments (121, 122) is equal to or greater than a set temperature after the primary defrosting operation is completed, wherein, after the intermediate cooling operation is performed, the controller (300) is configured to drive the first and second evaporation fans (135, 145) and turn off the compressor (210) to perform a secondary defrosting operation, in which the defrosting of the first evaporator (131) and the defrosting of the second evaporator (141) are performed, wherein a second end reference temperature for defrosting operation during the secondary defrosting operation of the first and second evaporators (131, 141) is greater than a first end reference temperature for defrosting operation during the primary defrosting operation of the first and second evaporators (131, 141).

2. The under counter type refrigerator according to claim 1, wherein the controller (300) is configured to control the first and second evaporation fans (135, 145) so that an operation speed of the first and second evaporation fans (135, 145) during the secondary defrosting operation of the first and second evaporators (131, 141) is less than an operation speed of the first and second evaporation fans (135, 145) during the primary defrosting operation of the first and second evaporators (131, 141).

3. The under counter type refrigerator according to any one of claims 1 or 2, wherein the controller (300) is configured to open both the first and second outlet ports (260a, 260b) of the valve (260) so that the refrigerant within the condenser (240) is supplied to the first and second evaporators (131, 141) when the defrosting of the first and second evaporators (131, 141) is performed.

4. The under counter type refrigerator according to any one of claims 1 to 3, wherein, when the cooling operation of the first storage compartment (121) is ended, the controller (300) is configured to:
drive the first evaporation fan (135) to perform the defrosting of the first evaporator (131); and
drive the second evaporation fan (145) to perform the cooling operation of the second storage compartment (122).

5. The under counter type refrigerator according to claim 4, wherein the controller (300) is configured to open the first and second outlet ports (260a, 260b) of the valve (260) so that the refrigerant is supplied to the first and second evaporators (131, 141) when the cooling operation of the second storage compartment (122) is ended while the first evaporation fan (135) is driven to perform the defrosting of the first evaporator (131).

6. The under counter type refrigerator according to claim 5, wherein the controller (300) is configured to turn off the compressor (210) and drive the second evaporation fan (145) so as to perform the defrosting of the second evaporator (141) when the cooling operation of the second storage compartment (122) is ended.

7. The under counter type refrigerator according to any one of claims 1 or 2, wherein, after the primary defrosting operation of the first and second evaporators (131, 141) is performed, the controller (300) is configured to delay starting of the intermediate cooling operation when a temperature of at least one of the first and second storage compartments (121, 122) is less than the set temperature even though a temperature of at least one of the first and second evaporators (131, 141) reaches a defrosting end reference temperature.

8. A method for controlling an under counter type refrigerator (100) , which is installed in a storage space of a kitchen furniture and comprises: a main body (110) defining first and second storage compartments that constitute a refrigerating compartment; first and second evaporators (131, 141) to generate cool air supplied to the first and second storage compartments (121, 122); first and second evaporation fans (135, 145) respectively provided at sides of the first and second evaporators (131, 141) to blow the cool air to the first and second storage compartments (121, 122); a machine room (200) provided at a lower portion of the main body (110) to define an installation space in which a compressor (210) and a condenser (240) are provided; and a valve (260) disposed at an outlet-side of the condenser (240), the valve (260) comprising a first outlet port (260a) to supply a refrigerant to the first evaporator (131) and a second outlet port (260b) to supply the refrigerant to the second evaporator (141), the method **characterized in that** it comprises:
performing (S12) pre-cooling operation;
performing (S13) an initial cooling operation by driving the compressor (210) and the first and second evaporation fans (135, 145) so that the first and second storage compartments (121, 122) reach a temperature satisfaction state; and
performing a defrosting operation by turning off the compressor (210), opening the first and second outlet ports (260a, 260b) of the valve (260) and driving the first and second evaporation fans (135, 145) after the initial cooling operation,
wherein the pre-cooling operation comprises:
a first step by closing the first and second outlet ports (260a, 260b) of the valve (260) for a predetermined time when a defrosting period arrives during an operation of the refrigerator, and
a second step by opening the first and second outlet ports (260a, 260b) of the valve (260) to allow the refrigerant existing in the condenser (240) to be collected to the evaporators (131,141),
wherein the performing of the defrosting operation comprises:
performing (S14) primary defrosting for the defrosting of the first and second evaporators (131, 141);
performing (S16) intermediate cooling for cooling the first and second storage compartments (121, 122) after the primary defrosting; and
performing (S17) secondary defrosting for the defrosting of the first and second evaporators (131, 141) after the intermediate cooling.

9. The method according to claim 8, wherein the performing of the initial cooling operation comprises:
opening the first outlet port (260a) of the valve (260) and closing the second outlet port (260b) of the valve (260) to cool the first storage compartment (121); and
opening the second outlet port (260b) of the valve (260) and closing the first outlet port (260a) of the valve (260) to cool the second storage compartment (122) after cooling the first storage compartment (121).

10. The method according to claim 9, wherein the performing of the defrosting operation comprises:
driving the first evaporation fan (135) so that the cool air within the first storage compartment (121) is supplied to the first evaporator (131) when the cooling of the first storage compartment (121) is ended; and
driving the second evaporation fan (145) so that the cool air within the second storage compartment (122) is supplied to the second evaporator (141) when the cooling of the second storage compartment (122) is ended.

11. The method according to any one of claims 8 to 10, wherein the performing of the pre-cooling operation comprises opening the first and second outlet ports (260a, 260b) of the valve (260) until the initial cooling operation starts when a set time elapses.

## Patentansprüche

1. Unterbaukühlschrank (100), der in einem Stauraum eines Küchenmöbels installiert werden kann, wobei der Unterbaukühlschrank (100) aufweist:
einen Hauptkörper (110), der ein erstes und ein zweites Aufbewahrungsfach (121, 122) definiert, die ein Kühlfach bilden;
einen ersten und einen zweiten Verdampfer (131, 141), um Kühlluft zu erzeugen, die dem ersten und dem zweiten Aufbewahrungsfach (121, 122) zugeführt wird;
einen ersten und einen zweiten Verdampferventilator (135, 145), die jeweils an den Seiten des ersten und des zweiten Verdampfers (131, 141) vorgesehen sind, um die Kühlluft in das erste und das zweite Aufbewahrungsfach (121, 122) zu blasen;
einen Maschinenraum (200), der an einem unteren Abschnitt des Hauptkörpers (110) vorgesehen ist, um einen Einbauraum zu definieren, in dem ein Verdichter (210) und ein Kondensator (240) vorgesehen sind;
ein Ventil (260), das an der Auslassseite des Kondensators (240) angeordnet ist, wobei das Ventil (260) einen ersten Auslassanschluss (260a), um dem ersten Verdampfer (131) ein Kältemittel zuzuführen, und einen zweiten Auslassanschluss (260b) aufweist, um dem zweiten Verdampfer (141) das Kältemittel zuzuführen; und
eine Steuerung (300), die konfiguriert ist, den Betrieb des Ventils (260) so zu steuern, dass ein Kühlbetrieb des ersten Aufbewahrungsfachs (121) und ein Kühlbetrieb des zweiten Aufbewahrungsfachs (122) durchgeführt werden,
**dadurch gekennzeichnet, dass**:
wenn eine Abtauperiode eintritt, die Steuerung (300) konfiguriert ist, um:
den Verdichter (210) abzuschalten und den ersten Verdampferventilator (135) zu betreiben, dass ein Abtauen des ersten Verdampfers (131) durchgeführt wird, indem es ermöglicht wird, dass die Kühlluft im ersten Aufbewahrungsfach (121) dem ersten Verdampfer (131) zugeführt wird; und
den zweiten Verdampferventilator (145) zu betreiben, dass ein Abtauen des zweiten Verdampfers (141) durchgeführt wird, indem es ermöglicht wird, dass die Kühlluft im zweiten Aufbewahrungsfach (122) dem zweiten Verdampfer (141) zugeführt wird,
wobei die Steuerung konfiguriert ist, um:
den ersten und den zweiten Verdampferventilator (135, 145) zu betreiben, um einen primären Abtaubetrieb durchzuführen, bei dem das Abtauen des ersten Verdampfers (131) und das Abtauen des zweiten Verdampfers (141) durchgeführt werden, während der Verdichter (210) ausgeschaltet ist; und
den Verdichter (210) zu betreiben, um einen Zwischenkühlbetrieb durchzuführen, um das erste und das zweite Aufbewahrungsfach (121, 122) zu kühlen, wenn eine Temperatur des ersten und des zweiten Aufbewahrungsfachs (121, 122) gleich oder größer als eine eingestellte Temperatur ist, nachdem der primäre Abtaubetrieb abgeschlossen ist, wobei nachdem der Zwischenkühlbetrieb durchgeführt ist, die Steuerung (300) konfiguriert ist, den ersten und den zweiten Verdampferventilator (135, 145) zu betreiben und den Verdichter (210) abzuschalten, um einen sekundären Abtaubetrieb durchzuführen, bei dem das Abtauen des ersten Verdampfers (131) und das Abtauen des zweiten Verdampfers (141) durchgeführt werden, wobei eine zweite Endreferenztemperatur für den Abtaubetrieb während des sekundären Abtaubetriebs des ersten und des zweiten Verdampfers (131, 141) größer ist als eine erste Endreferenztemperatur für den Abtaubetrieb während des primären Abtaubetriebs des ersten und des zweiten Verdampfers (131, 141).

2. Unterbaukühlschrank nach Anspruch 1, wobei die Steuerung (300) konfiguriert ist, den ersten und den zweiten Verdampferventilator (135, 145) so zu steuern, dass eine Betriebsdrehzahl des ersten und des zweiten Verdampferventilators (135, 145) während des sekundären Abtaubetriebs des ersten und des zweiten Verdampfers (131, 141) geringer ist als eine Betriebsdrehzahl des ersten und des zweiten Verdampferventilators (135, 145) während des primären Abtaubetriebs des ersten und des zweiten Verdampfers (131, 141).

3. Unterbaukühlschrank nach einem der Ansprüche 1 oder 2, wobei die Steuerung (300) konfiguriert ist, sowohl den ersten als auch den zweiten Auslassanschluss (260a, 260b) des Ventils (260) zu öffnen, so dass das Kältemittel innerhalb des Kondensators (240) dem ersten und dem zweiten Verdampfer (131, 141) zugeführt wird, wenn das Abtauen des ersten und des zweiten Verdampfers (131, 141) durchgeführt wird.

4. Unterbaukühlschrank nach einem der Ansprüche 1 bis 3, wobei, wenn der Kühlbetrieb des ersten Aufbewahrungsfachs (121) beendet ist, die Steuerung (300) konfiguriert ist:
den ersten Verdampferventilator (135) zu betreiben, um das Abtauen des ersten Verdampfers (131) durchzuführen; und
den zweiten Verdampferventilator (145) zu betreiben, um den Kühlbetrieb des zweiten Aufbewahrungsfachs (122) durchzuführen.

5. Unterbaukühlschrank nach Anspruch 4, wobei die Steuerung (300) konfiguriert ist, den ersten und den zweiten Auslassanschluss (260a, 260b) des Ventils (260) zu öffnen, so dass das Kältemittel dem ersten und dem zweiten Verdampfer (131, 141) zugeführt wird, wenn der Kühlbetrieb des zweiten Aufbewahrungsfachs (122) beendet ist, während der erste Verdampferventilator (135) betrieben wird, um das Abtauen des ersten Verdampfers (131) durchzuführen.

6. Unterbaukühlschrank nach Anspruch 5, wobei die Steuerung (300) konfiguriert ist, den Verdichter (210) abzuschalten und den zweiten Verdampferventilator (145) zu betreiben, um das Abtauen des zweiten Verdampfers (141) durchzuführen, wenn der Kühlbetrieb des zweiten Aufbewahrungsfachs (122) beendet ist.

7. Unterbaukühlschrank nach einem der Ansprüche 1 oder 2, wobei, nachdem der primäre Abtaubetrieb des ersten und des zweiten Verdampfers (131, 141) durchgeführt wird, die Steuerung (300) konfiguriert ist, den Start des Zwischenkühlbetriebs zu verzögern, wenn eine Temperatur von mindestens einem des ersten und zweiten Aufbewahrungsfachs (121, 122) kleiner als die eingestellte Temperatur ist, selbst wenn die Temperatur von mindestens einem des ersten und zweiten Verdampfers (131, 141) eine Abtauendreferenztemperatur erreicht.

8. Verfahren zum Steuern eines Unterbaukühlschranks (100), der in einem Stauraum eines Küchenmöbels installiert ist und aufweist: einen Hauptkörper (110), der ein erstes und ein zweites Aufbewahrungsfach definiert, die ein Kühlfach bilden; einen ersten und einen zweiten Verdampfer (131, 141), um Kühlluft zu erzeugen, die dem ersten und dem zweiten Aufbewahrungsfach (121, 122) zugeführt wird; einen ersten und einen zweiten Verdampferventilator (135, 145), die jeweils an den Seiten des ersten und des zweiten Verdampfers (131, 141) vorgesehen sind, um die Kühlluft zu dem ersten und dem zweiten Aufbewahrungsfach (121, 122) zu blasen; einen Maschinenraum (200), der an einem unteren Abschnitt des Hauptkörpers (110) vorgesehen ist, um einen Einbauraum zu definieren, in dem ein Verdichter (210) und ein Kondensator (240) vorgesehen sind; und ein Ventil (260), das an einer Auslassseite des Kondensators (240) angeordnet ist, wobei das Ventil (260) einen ersten Auslassanschluss (260a), um dem ersten Verdampfer (131) ein Kältemittel zuzuführen, und einen zweiten Auslassanschluss (260b) aufweist, um dem zweiten Verdampfer (141) das Kältemittel zuzuführen, wobei das Verfahren **dadurch gekennzeichnet ist, dass** es aufweist:
Durchführen (S12) eines Vorkühlbetriebs;
Durchführen (S13) eines anfänglichen Kühlbetriebs durch Betreiben des Verdichters (210) und des ersten und zweiten Verdampferventilators (135, 145), so dass das erste und das zweite Aufbewahrungsfach (121, 122) einen Temperaturerfüllungszustand erreichen; und
Durchführen eines Abtaubetriebs durch Abschalten des Verdichters (210), Öffnen des ersten und zweiten Auslassanschlusses (260a, 260b) des Ventils (260) und Betreiben des ersten und zweiten Verdampferventilators (135, 145) nach dem anfänglichen Kühlbetrieb,
wobei der Vorkühlbetrieb aufweist:
einen ersten Schritt durch Schließen des ersten und des zweite Auslassanschlusses (260a, 260b) des Ventils (260) für eine vorbestimmte Zeit, wenn während des Betriebs des Kühlschranks eine Abtauperiode eintritt, und
einen zweiten Schritt durch Öffnen des ersten und des zweite Auslassanschlusses (260a, 260b) des Ventils (260), um es zu ermöglichen, dass das im Kondensator (240) vorhandene Kältemittel in den Verdampfern (131, 141) gesammelt wird,
wobei das Durchführen des Abtaubetriebs aufweist:
Durchführen (S14) eines primären Abtauens zum Abtauen des ersten und des zweiten Verdampfers (131, 141);
Durchführen (S16) einer Zwischenkühlung zum Kühlen des ersten und des zweiten Aufbewahrungsfachs (121, 122) nach dem primären Abtauen; und
Durchführen (S17) eines sekundären Abtauens zum Abtauen des ersten und des zweiten Verdampfers (131, 141) nach der Zwischenkühlung.

9. Verfahren nach Anspruch 8, wobei das Durchführen des anfänglichen Kühlbetriebs aufweist:
Öffnen des ersten Auslassanschlusses (260a) des Ventils (260) und das Schließen des zweiten Auslassanschlusses (260b) des Ventils (260), um das erste Aufbewahrungsfach (121) zu kühlen; und
Öffnen des zweiten Auslassanschlusses (260b) des Ventils (260) und das Schließen des ersten Auslassanschlusses (260a) des Ventils (260), um das zweite Aufbewahrungsfach (122) nach dem Kühlen des ersten Aufbewahrungsfachs (121) zu kühlen.

10. Verfahren nach Anspruch 9, wobei das Durchführen des Abtaubetriebs aufweist:
Betreiben des ersten Verdampferventilators (135), so dass die Kühlluft innerhalb des ersten Aufbewahrungsfachs (121) dem ersten Verdampfer (131) zugeführt wird, wenn die Kühlung des ersten Aufbewahrungsfachs (121) beendet ist; und
Betreiben des zweiten Verdampferventilators (145), so dass die Kühlluft innerhalb des zweiten Aufbewahrungsfachs (122) dem zweiten Verdampfer (141) zugeführt wird, wenn die Kühlung des zweiten Aufbewahrungsfachs (122) beendet ist.

11. Verfahren nach einem der Ansprüche 8 bis 10, wobei das Durchführen des Vorkühlbetriebs das Öffnen des ersten und zweiten Auslassanschlusses (260a, 260b) des Ventils (260) aufweist, bis der anfängliche Kühlbetrieb beginnt, wenn eine eingestellte Zeit verstrichen ist.

## Revendications

1. Réfrigérateur de type encastré (100) pouvant être installé dans un espace de rangement d'un meuble de cuisine, le réfrigérateur de type encastré (100) comprenant :
un corps principal (110) définissant des premier et deuxième compartiments de stockage (121, 122) qui constituent un compartiment de réfrigération ;
des premier et deuxième évaporateurs (131, 141) destinés à générer de l'air froid acheminé vers les premier et deuxième compartiments de stockage (121, 122) ;
des premier et deuxième ventilateurs d'évaporation (135, 145) respectivement disposés sur les côtés des premier et deuxième évaporateurs (131, 141) pour souffler l'air froid vers les premier et deuxième compartiments de stockage (121, 122) ;
un compartiment technique (200) prévu dans une partie inférieure du corps principal (110) pour définir un espace d'installation dans lequel sont disposés un compresseur (210) et un condenseur (240) ;
une vanne (260) disposée du côté sortie du condenseur (240), la vanne (260) comprenant un premier orifice de sortie (260a) destiné à fournir un fluide frigorigène au premier évaporateur (131) et un deuxième orifice de sortie (260b) destiné à fournir le fluide frigorigène au deuxième évaporateur (141) ; et
un contrôleur (300) configuré pour commander le fonctionnement de la vanne (260) de manière à ce qu'une opération de refroidissement du premier compartiment de stockage (121) et une opération de refroidissement du deuxième compartiment de stockage (122) soient effectuées,
**caractérisé en ce que** :
lorsqu'une période de dégivrage survient, le contrôleur (300) est configuré pour :
arrêter le compresseur (210) et actionner le premier ventilateur d'évaporation (135) de manière à effectuer le dégivrage du premier évaporateur (131) en permettant à l'air froid présent dans le premier compartiment de stockage (121) d'être acheminé vers le premier évaporateur (131) ; et
actionner le deuxième ventilateur d'évaporation (145) de manière à ce que le dégivrage du deuxième évaporateur (141) soit effectué en permettant à l'air froid présent dans le deuxième compartiment de stockage (122) d'être acheminé vers le deuxième évaporateur (141),
le contrôleur étant configuré pour :
actionner les premier et deuxième ventilateurs d'évaporation (135, 145) pour effectuer une opération de dégivrage primaire, au cours de laquelle le dégivrage du premier évaporateur (131) et le dégivrage du deuxième évaporateur (141) sont effectués alors que le compresseur (210) est à l'arrêt ; et
actionner le compresseur (210) pour effectuer une opération de refroidissement intermédiaire de manière à refroidir les premier et deuxième compartiments de stockage (121, 122) lorsque la température des premier et deuxième compartiments de stockage (121, 122) est égale ou supérieure à une température de consigne une fois l'opération de dégivrage primaire terminée, dans lequel, une fois l'opération de refroidissement intermédiaire effectuée, le contrôleur (300) est configuré pour commander les premier et deuxième ventilateurs d'évaporation (135, 145) et arrêter le compresseur (210) afin d'effectuer une opération de dégivrage secondaire, au cours de laquelle le dégivrage du premier évaporateur (131) et le dégivrage du deuxième évaporateur (141) sont effectués, une deuxième température de référence de fin d'opération de dégivrage pendant l'opération de dégivrage secondaire des premier et deuxième évaporateurs (131, 141) étant supérieure à une première température de référence de fin d'opération de dégivrage pendant l'opération de dégivrage primaire des premier et deuxième évaporateurs (131, 141).

2. Réfrigérateur de type encastré selon la revendication 1, dans lequel le contrôleur (300) est configuré pour commander les premier et deuxième ventilateurs d'évaporation (135, 145) de telle sorte qu'une vitesse de fonctionnement des premier et deuxième ventilateurs d'évaporation (135, 145) pendant l'opération de dégivrage secondaire des premier et deuxième évaporateurs (131, 141) soit inférieure à la vitesse de fonctionnement des premier et deuxième ventilateurs d'évaporation (135, 145) pendant l'opération de dégivrage primaire des premier et deuxième évaporateurs (131, 141).

3. Réfrigérateur de type encastré selon l'une quelconque des revendications 1 et 2, dans lequel le contrôleur (300) est configuré pour ouvrir à la fois les premier et deuxième orifices de sortie (260a, 260b) de la vanne (260) de sorte que le fluide frigorigène présent dans le condenseur (240) soit acheminé vers les premier et deuxième évaporateurs (131, 141) lorsque le dégivrage des premier et deuxième évaporateurs (131, 141) est effectué.

4. Réfrigérateur de type encastré selon l'une quelconque des revendications 1 à 3, dans lequel, lorsque l'opération de refroidissement du premier compartiment de stockage (121) est terminée, le contrôleur (300) est configuré pour :
actionner le premier ventilateur d'évaporation (135) pour effectuer le dégivrage du premier évaporateur (131) ; et
actionner le deuxième ventilateur d'évaporation (145) pour effectuer l'opération de refroidissement du deuxième compartiment de stockage (122).

5. Réfrigérateur de type encastré selon la revendication 4, dans lequel le contrôleur (300) est configuré pour ouvrir les premier et deuxième orifices de sortie (260a, 260b) de la vanne (260) de manière à ce que le fluide frigorigène soit fourni aux premier et deuxième évaporateurs (131, 141) lorsque l'opération de refroidissement du deuxième compartiment de stockage (122) est terminée, tandis que le premier ventilateur d'évaporation (135) est actionné pour effectuer le dégivrage du premier évaporateur (131).

6. Réfrigérateur de type encastré selon la revendication 5, dans lequel le contrôleur (300) est configuré pour arrêter le compresseur (210) et actionner le deuxième ventilateur d'évaporation (145) de manière à effectuer le dégivrage du deuxième évaporateur (141) lorsque l'opération de refroidissement du deuxième compartiment de stockage (122) est terminée.

7. Réfrigérateur de type encastré selon l'une quelconque des revendications 1 et 2, dans lequel, une fois l'opération de dégivrage primaire des premier et deuxième évaporateurs (131, 141) effectuée, le contrôleur (300) est configuré pour retarder le démarrage de l'opération de refroidissement intermédiaire lorsque la température d'au moins l'un des premier et deuxième compartiments de stockage (121, 122) est inférieure à la température de consigne, même si la température d'au moins l'un des premier et deuxième évaporateurs (131, 141) atteint une température de référence de fin de dégivrage.

8. Procédé de commande d'un réfrigérateur encastré (100), qui est installé dans un espace de rangement d'un meuble de cuisine et comprend : un corps principal (110) définissant des premier et deuxième compartiments de rangement qui constituent un compartiment de réfrigération ; des premier et deuxième évaporateurs (131, 141) destinés à générer de l'air froid fourni aux premier et deuxième compartiments de stockage (121, 122) ; des premier et deuxième ventilateurs d'évaporation (135, 145) respectivement disposés sur les côtés des premier et deuxième évaporateurs (131, 141) pour souffler l'air froid vers les premier et deuxième compartiments de stockage (121, 122) ; un compartiment technique (200) prévu dans une partie inférieure du corps principal (110) pour définir un espace d'installation dans lequel sont disposés un compresseur (210) et un condenseur (240) ; et une vanne (260) disposée du côté sortie du condenseur (240), la vanne (260) comprenant un premier orifice de sortie (260a) destiné à fournir un fluide frigorigène au premier évaporateur (131) et un deuxième orifice de sortie (260b) destiné à fournir le fluide frigorigène au deuxième évaporateur (141), le procédé étant **caractérisé en ce qu'**il comprend :
l'exécution (S12) d'une opération de pré-refroidissement ;
l'exécution (S13) d'une opération de refroidissement initiale en actionnant le compresseur (210) ainsi que les premier et deuxième ventilateurs d'évaporation (135, 145) de manière à ce que les premier et deuxième compartiments de stockage (121, 122) atteignent un état de température satisfaisant ; et
l'exécution d'une opération de dégivrage en arrêtant le compresseur (210), en ouvrant les premier et deuxième orifices de sortie (260a, 260b) de la vanne (260) et en actionnant les premier et deuxième ventilateurs d'évaporation (135, 145) après l'opération de refroidissement initiale,
dans lequel l'opération de pré-refroidissement comprend :
une première étape consistant à fermer les premier et deuxième orifices de sortie (260a, 260b) de la vanne (260) pendant une durée prédéterminée lorsqu'une période de dégivrage survient au cours du fonctionnement du réfrigérateur, et
une deuxième étape consistant à ouvrir les premier et deuxième orifices de sortie (260a, 260b) de la vanne (260) afin de permettre au fluide frigorigène présent dans le condenseur (240) d'être acheminé vers les évaporateurs (131, 141),
dans lequel l'exécution de l'opération de dégivrage comprend :
l'exécution (S14) d'un dégivrage primaire pour dégivrer les premier et deuxième évaporateurs (131, 141) ;
l'exécution (S16) d'un refroidissement intermédiaire pour refroidir les premier et deuxième compartiments de stockage (121, 122) après le dégivrage primaire ; et
l'exécution (S17) d'un dégivrage secondaire pour dégivrer les premier et deuxième évaporateurs (131, 141) après le refroidissement intermédiaire.

9. Procédé selon la revendication 8, dans lequel l'exécution de l'opération de refroidissement initiale comprend :
l'ouverture du premier orifice de sortie (260a) de la vanne (260) et la fermeture du deuxième orifice de sortie (260b) de la vanne (260) afin de refroidir le premier compartiment de stockage (121) ; et
l'ouverture du deuxième orifice de sortie (260b) de la vanne (260) et la fermeture du premier orifice de sortie (260a) de la vanne (260) pour refroidir le deuxième compartiment de stockage (122) après le refroidissement du premier compartiment de stockage (121).

10. Procédé selon la revendication 9, dans lequel l'exécution de l'opération de dégivrage comprend :
l'actionnement du premier ventilateur d'évaporation (135) de manière à ce que l'air froid présent à l'intérieur du premier compartiment de stockage (121) soit acheminé vers le premier évaporateur (131) lorsque le refroidissement du premier compartiment de stockage (121) est terminé ; et
l'actionnement du deuxième ventilateur d'évaporation (145) de manière à ce que l'air froid présent dans le deuxième compartiment de stockage (122) soit acheminé vers le deuxième évaporateur (141) lorsque le refroidissement du deuxième compartiment de stockage (122) est terminé.

11. Procédé selon l'une quelconque des revendications 8 à 10, dans lequel l'exécution de l'opération de pré-refroidissement comprend l'ouverture des premier et deuxième orifices de sortie (260a, 260b) de la vanne (260) jusqu'à ce que l'opération de refroidissement initiale démarre lorsqu'un temps prédéfini s'est écoulé.
